(19) **Europäisches Patentamt**
**European Patent Office**
**Office européen des brevets**

(11) **EP 2 325 220 A1**

(12) **EUROPÄISCHE PATENTANMELDUNG**

(43) Veröffentlichungstag:
**25.05.2011 Patentblatt 2011/21**

(21) Anmeldenummer: **10189548.0**

(22) Anmeldetag: **01.11.2010**

(51) Int Cl.:
*C08G 18/08* (2006.01)   *C08G 18/12* (2006.01)
*C08G 18/66* (2006.01)   *C09D 175/08* (2006.01)
*C09J 7/02* (2006.01)   *C09J 175/04* (2006.01)
*C08G 18/30* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.11.2009   DE 102009046657**

(71) Anmelder: **tesa SE**
**20253 Hamburg (DE)**

(72) Erfinder:
• **Gouttefarde, Rose-Marie**
**95447, Bayreuth (DE)**
• **Schümann, Dr. Uwe**
**25421, Pinneberg (DE)**
• **Weiland, Kirstin**
**21035, Hamburg (DE)**

(54) **Haftklebstoff auf Basis von Polyurethan**

(57)    Haftklebstoff auf Basis von Polyurethan, **dadurch gekennzeichnet, dass** das Polyurethan das chemische Umsetzungsprodukt aus zumindest folgenden Ausgangsstoffen umfasst:

a) Polyisocyanate umfassend zumindest ein aliphatisches oder alicyclisches Diisocyanat und zumindest ein aliphatisches oder alicyclisches Polyisocyanat mit einer Isocyanat-Funktionalität von drei oder größer drei, wobei der Stoffmengenanteil der aliphatischen oder alicyclischen Polyisocyanate mit einer Isocyanat-Funktionalität von drei oder größer drei an den Polyisocyanaten mindestens 18 Prozent beträgt und

b) zumindest ein haftklebriges, hydroxyl-funktionalisiertes Polyurethan-Prepolymer.

EP 2 325 220 A1

**Beschreibung**

Die vorliegende Erfindung betrifft einen Haftklebstoff auf Basis von Polyurethan sowie eine haftklebrige Schicht und ein Klebeband auf Basis dieses Haftklebstoffs, die Verwendung dieses Haftklebstoffs als Haftklebstoffschicht, Trägerschicht oder Funktionsschicht in einem Klebeband sowie Verfahren zu dessen Herstellung.

Haftklebstoffe haben besondere, charakteristische viskoelastische Eigenschaften. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G'), Verlustmodul (G") sowie der als Verlustfaktor tan δ (tan delta) bezeichnete Quotient G"/G' herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.
Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G" = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff ist im Allgemeinen haftklebrig, wenn bei Raumtemperatur im Frequenzbereich von $10^0$ bis $10^1$ rad/sec, idealerweise im Frequenzbereich von $10^{-1}$ bis $10^2$ rad/sec, G' zumindest zum Teil im Bereich von $10^3$ bis $10^7$ Pa liegt und wenn G" ebenfalls zumindest zum Teil in diesem Bereich liegt. Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), p. 153-203" beschrieben.

Eine von vielen ergänzenden oder auch alternativen Möglichkeiten zur Beschreibung und Quantifizierung von Haftklebrigkeit ist die direkte Messung des Tacks mit Hilfe eines Tackmessgerätes, zum Beispiel des Texture Analysers TA 2 der Firma SMS (Stable Micro Systems). Nach dieser Methode wird ein Stempel ausgewählter geometrischer Form, zum Beispiel ein zylindrischer Stempel aus einem ausgewählten Material, zum Beispiel aus Stahl mit definierter Andruckkraft und -geschwindigkeit auf die zu untersuchende Probe gedrückt und nach definierter Zeit mit definierter Geschwindigkeit wieder abgezogen. Das Prüfergebnis ist die zum Abziehen erforderliche maximal Kraft, angegeben in der Einheit N.

Ein Stoff kann als haftklebrig angesehen werden, wenn bei Messung mit einem Stahlzylinder mit einem Zylinderradius von 1mm, einer Andruckgeschwindigkeit des Zylinders auf den zu messenden Stoff von 0,1 mm/s, einer Andruckkraft von 5 N, einer Andruckzeit von 0,01 s und deiner Abzugsgeschwindigkeit von 0,6 mm/s die zum Abziehen des Stempels erforderliche maximale Kraft mindestens 0,1 N beträgt.

Klebebänder sind häufig aus mehreren, aufeinander liegenden und chemisch oder physikalisch miteinander verankerten Schichten aufgebaut. Die Haftklebeeigenschaften eines Klebebandes werden nicht nur durch die Haftklebeeigenschaften des Haftklebstoffs beeinflusst, sondern auch durch die viskoelastischen Eigenschaften der anderen Schichten sowie auch durch die Dicken der einzelnen Schichten. Die Einflussnahme auf die Haftklebeeigenschaften eines Klebebandes pflanzt sich quasi durch alle Schichten eines Klebebandes fort. So können zum Beispiel auch die viskoelastischen Eigenschaften einer Trägerschicht Auswirkungen auf die Haftklebeeigenschaften eines Klebebandes haben. Selbst die viskoelastischen Eigenschaften von Funktionsschichten eines Klebebandes können einen Einfluss auf die Haftklebeigenschaften eines Klebebandes ausüben. Mit Funktionsschichten sind beispielsweise Primerschichten gemeint oder Schichten mit besonderen optischen, elektrischen oder wärmeleitenden Eigenschaften, um nur einige Beispiele zu nennen.

Im Hinblick auf die Herstellung selbstklebender Artikel in einem kontinuierlichen Beschichtungsprozess sind vielfältige Technologien bekannt. Grundsätzlich kann zwischen lösungsmittelbasierten und lösungsmittelfreien Technologien unterschieden werden.

In lösungsmittelbasierten Systemen liegt das haftklebrige Polymer beziehungsweise die haftklebrige Stoffmischung vor der Beschichtung in Lösung vor. Kurz vor der Beschichtung auf einen Träger oder einen Hilfsträger wird gegebenenfalls ein chemischer Vernetzer zugemischt. Der Vernetzer ist hinsichtlich seiner Art und Konzentration in der Regel so ausgewählt, dass der Vernetzungsprozess genügend langsam verläuft, so dass es nicht schon vor der Beschichtung zu Vergelungen in der Lösung kommt. Nach der Beschichtung und dem Abdampfen des Lösungsmittels liegt das haftklebrige Polymer beziehungsweise die haftklebrige Stoffmischung auf dem Träger oder dem Hilfsträger als Film oder filmartige Schicht vor und kann aufgewickelt werden, unabhängig davon, ob der Vernetzungsprozess bereits abgeschlossen ist oder nicht. Der Film beziehungsweise die filmartige Schicht liegt in einem derart hochviskosen Zustand vor, dass dieser Zustand eher dem eines festen Stoffes ähnelt als dem einer Flüssigkeit. Die Vernetzung beeinflusst diesen festen Charakter des Films beziehungsweise der filmartigen Schicht in der Regel nicht merklich. Der feste Charakter des Films beziehungsweise der filmartigen Schicht ist die Grundvoraussetzung für die Aufwickelbarkeit zu einer Rolle.

Lösungsmittelbasierte Technologien haben den grundsätzlichen Nachteil, dass sie nicht zur Herstellung dicker Schichten geeignet sind, insbesondere dann nicht, wenn mit einer wirtschaftlich vertretbaren Geschwindigkeit beschichtet werden soll. Bereits bei Schichtdicken ab ca. 100 bis 150 $\mu m$ kommt es zur vermehrten, sichtbaren Bläschenbildung durch das abdampfende Lösungsmittel und damit zu deutlichen Qualitätseinbußen, so dass eine Verwendung als Schicht in einem Klebeband dann nicht mehr in Frage kommt. Auch bei der Herstellung dünnerer Schichten ist die Beschichtungsgeschwindigkeit durch die Notwendigkeit, das Lösungsmittel abzudampfen, erheblich limitiert. Zudem verursachen lösemittelbasierte Beschichtungsprozesse erhebliche Prozesskosten durch die Notwendigkeit der Lösemittelrückgewinnung oder -verbrennung.

Lösungsmittelfreie Systeme können unterteilt werden in Reaktivsysteme, die auch ohne Lösungsmittel bei Raumtemperatur flüssig, sirupartig oder pastös sind und in Hotmeltsysteme, in denen das haftklebrige Polymer beziehungsweise die haftklebrige Stoffmischung bei Raumtemperatur so hochviskos sind, dass sie den Charakter eines festen Stoffes haben und bei Zufuhr von Wärme schmelzen beziehungsweise in einen Zustand übergehen, der eine Verarbeitung in der Art ermöglicht, wie sie für flüssige, sirupartige oder pastöse Stoffe üblich ist.

Typische Beispiele für bei Raumtemperatur flüssige, sirupartige oder pastöse Reaktivsysteme sind die allgemein bekannten zweikomponentigen Polyurethane, Epoxide oder Silikone. Mit derartigen Reaktivsystemen können sowohl dünne als auch dicke Schichten hergestellt werden, was einen großen Vorteil gegenüber lösungsmittelbasierten Systemen darstellt.

Bei Raumtemperatur flüssige, sirupartige oder pastöse Reaktivsysteme haben aber im Hinblick auf eine kontinuierliche Beschichtung, die in der Regel den zentralen Prozessschritt einer üblichen Klebebandfertigung darstellt, den Nachteil, dass sie in diesem Zustand nicht oder zumindest nicht mit konstanter Schichtdicke aufgewickelt werden können, insbesondere dann nicht, wenn es sich um hohe Schichtdicken handelt. Mit konstanter Schichtdicke können nur Polymerfilme aufgewickelt werden, die fest oder zumindest so hochviskos sind, dass sie den Charakter eines festen Stoffes haben. Die Verfestigung lösungsmittelfreier, bei Raumtemperatur flüssiger Reaktivsysteme, ist an das Voranschreiten einer chemischen Reaktion gekoppelt, die in der Regel nach dem Vermischen der Komponenten einsetzt. Der Reaktionsfortschritt benötigt eine gewisse Zeit. Erst wenn es zur Verfestigung des Films durch einen genügend hohen Umsetzungsgrad der jeweiligen chemischen Reaktion gekommen ist, kann der auf einen Träger oder Hilfsträger beschichtete Film aufgewickelt werden. Somit sind solche Systeme in der Beschichtungsgeschwindigkeit limitiert.

Die in EP 1 469 024 A2, in EP 1 469 055 B1, in EP 1 849 811 A1 oder in WO 2008/009542 beschrieben Haftklebstoffe auf Polyurethanbasis fallen in diese Kategorie von Reaktivsystemen. Sie sind somit als Film und/oder Haftklebstoffschicht als Bestandteil eines Klebebandes nur mit einer limitierten und daher im Regelfall wenig ökonomischen Beschichtungsgeschwindigkeit herstellbar.

Auch die in EP 0 801 121 B1 und EP 0 894 841 B1 beschriebenen Selbstklebeband-Träger auf Polyurethanbasis haben wie die oben aufgeführten Haftklebstoffe den Nachteil, dass sie während der Beschichtung aus flüssigen oder pastösen Komponenten hergestellt werden. Somit muss auch hier der Reaktionsfortschritt abgewartet werden, bis diese Träger aufgewickelt werden können, was die Beschichtungsgeschwindigkeit und somit die Wirtschaftlichkeit der Herstellung limitiert. Der gleiche Nachteil trifft für die Stoffe zu, die nach dem in EP 1 095 993 B1 beschriebenen Verfahren zur kontinuierlichen Herstellung von selbstklebenden Artikeln aus zweikomponentigen Polyurethanen hergestellt werden.

Klebebänder beziehungsweise Klebebandschichten auf Basis sirupartiger Komponenten sind zum Beispiel in EP 0 259 094 B1 oder in EP 0305 161 B1 beschriebenen, in denen der Polymeraufbau bzw. die Vernetzung durch Photopolymerisation erzielt wird.

Auch diese Reaktivsysteme haben den Nachteil, dass sie in ihrem sirupartigen Zustand nicht oder zumindest nicht mit konstanter Schichtdicke aufgewickelt werden können. Auch hier ist die Aufwickelfähigkeit an einen Reaktionsfortschritt gebunden, der eine gewisse Zeit benötigt. Somit sind auch solche Systeme in der Beschichtungsgeschwindigkeit limitiert.

Flüssige, sirupartige oder pastöse Reaktivsysteme, deren Polymeraufbau und deren Vernetzung von außen zum Beispiel durch UV- oder ESH-Strahlung initiiert wird, haben in der Regel den zusätzlichen Nachteil, dass es nur dann zu einem Polymeraufbau mit durchgehend homogenen Eigenschaften kommt, wenn die Strahlung gleichmäßig alle am Polymeraufbau beteiligten Moleküle durch die gesamte Dicke des Films hindurch erreicht. Dies ist insbesondere bei hohen Schichtdicken oder bei mit Füllstoffen gefüllten Systemen nicht der Fall, so dass solche Filme dann ein inhomogen vernetztes Polymergerüst aufweisen.

Hotmeltsysteme haben gegenüber den flüssigen, sirupartigen oder pastösen Reaktivsystemen den Vorteil, dass mit ihnen hohe Beschichtungsgeschwindigkeiten erzielbar sind, insbesondere bei ihrer Verarbeitung in Extrusionsprozessen. In Extrusionsprozessen werden Polymere, die bei Raumtemperatur fest und schmelzbar oder derart hochviskos sind, dass sie den Charakter eines festen Stoffes haben, geschmolzen bzw. durch Temperaturerhöhung in einen niederviskosen Zustand überführt, in diesem Zustand zu einem Film ausgeformt und in der Regel auf einen Träger oder Hilfsträger beschichtet. Nach Abkühlung auf Raumtemperatur und damit Verfestigung kann sofort aufgewickelt werden. Die Aufwickelfähigkeit ist nicht an das Voranschreiten einer chemischen Reaktion gebunden. Der Prozess der Abkühlung eines Films nimmt in aller Regel nur vergleichsweise wenig Zeit in Anspruch. Polymere, die bei Raumtemperatur den Charakter eines festen Stoffes haben und in Extrusionprozessen verarbeitet werden können, werden im Allgemeinen als Hotmelts bezeichnet. Wie mit den flüssigen, sirupartigen oder pastösen Reaktivsystemen können auch mit Hotmelts Schichten ohne eine grundsätzliche Dickenlimitierung hergestellt werden. Im Klebebandbereich werden vor allem Styrol-Blockcopolymer-haltige Haftklebstoffe, beschrieben beispielsweise in DE 100 03 318 A1 oder DE 102 52 088 A1, auf diese Weise beschichtet.

Auch thermoplastische Polyurethane können in Hotmelt-Prozessen verarbeitet werden. DE 20 59 570 A beschreibt beispielsweise ein kontinuierliches Einschritt-Herstellungsverfahren für ein thermoplastisches, unporiges Polyurethan.

Die Herstellung thermoplastisch verarbeitbarer Polyurethane aus einem zunächst als Zwischenstufe hergestellten OH-terminierten linearen Prepolymer ist beispielsweise in DE10 2005 039 933 A beschrieben. Auch DE 22 48 382 C2 beschreibt die Herstellung von thermoplastischen Polyurethanen aus OH-terminierten Prepolymeren in einem mehrstufigen Prozess. In den genannten Schriften werden keine Hinweise auf für Haftklebeanwendungen geeignete viskoelastische Eigenschaften gegeben. Auch in US 2007/0049719 A1 werden hydroxyl-terminierte Polyurethan-Prepolymere beschrieben. Auch dort werden keine Hinweise auf für Haftklebeanwendungen geeignete viskoelastische Eigenschaften gegeben.

Hydroxyl-terminierte Polyurethan-Prepolymere werden ebenfalls in US 2007/0129456 A1 beschrieben. Diese Prepolymere dienen der Herstellung von synthetischem Leder und sind bei Raumtemperatur flüssig oder halbfest. Sie enthalten kristallines Polyether-Polyol und kristallines Polyester-Polyol. Hinweise auf für Haftklebeanwendungen geeignete viskoelastische Eigenschaften werden nicht gegeben. Es werden auch keine Hinweise auf einen zum Aufwickeln als Klebebandrolle genügend festen Charakter dieser Prepolymere gegeben.

Hotmelt-Beschichtungsprozesse auf Basis thermoplastischer oder thermoplastisch verarbeitbarer Polymere haben zwar die Vorteile einer hohen erzielbaren Beschichtungsgeschwindigkeit sowie der Herstellbarkeit dicker Schichten, führen aber zu Polymerfilmen, die nicht oder zumindest nicht ausreichend vernetzt sind, so dass diese Filme als Klebebandschichten, bei denen es auf eine hohe dauerhafte Belastbarkeit, insbesondere bei höheren Temperaturen ankommt, nicht geeignet sind.

Die Extrusion von Polyurethanelastomeren unter Mitverwendung von Triolen, die zu einem vernetzten Charakter der Elastomere führen könnten, ist beispielsweise aus DE 19 64 834 A und aus DE 23 02 564 C3 bekannt. In diesen Schriften wird aber die Umsetzung flüssiger Ausgangsstoffe beschrieben, so dass der Nachteil vorliegt, dass vor dem Aufwickeln solcher Elastomere die vom Reaktionsfortschritt abhängige Verfestigung abgewartet werden muss. Hinweise auf für Haftklebeanwendungen geeignete viskoelastische Eigenschaften der nach den in diesen Schriften beschriebenen Verfahren hergestellten Produkte werden nicht gegeben. In den in diesen Schriften beschriebenen Verfahren werden zudem keine hydroxyl-terminierten Prepolymere verwendet, sondern nur isocyanat-terminierte. Das Molekulargewicht der in diesen Schriften verwendeten Triole wird mit 500 nach oben begrenzt.

In EP 135 111 B1 wird die Herstellung von verzweigten, aber thermoplastisch verarbeitbaren und somit nicht vernetzten Polyurethanen in einem mehrstufigen Verfahren beschrieben. Als erste Zwischenstufe A wird ein OH-terminiertes Prepolymer vorgeschlagen, das aus im Wesentlichen linearen höhermolekularen Polyhydroxylverbindungen aufgebaut ist. Das Molekulargewicht der Polyhydroxylverbindungen wird mit 550 nach unten begrenzt. Hinweise auf für Haftklebeanwendungen geeignete viskoelastische Eigenschaften oder auf Hotmelteigenschaften des OH-terminierten Prepolymers werden nicht gegeben.

In JP 2006/182795 wird ein hydroxyl-funktionalisiertes Polyurethan-Prepolymer aus einem Polyether-Polyol-Gemisch, bestehend aus einem Polyether-Diol und einem Polyether-Triol, und Polyisocyanat beschrieben. Die durchschnittliche Funktionalität des Polyol-Gemisches beträgt 2,2 bis 3,4. Weiter wird die Umsetzung dieses Prepolymers mit einem polyfunktionellen Isocyanat zu einem Klebstofffilm beschrieben. Das hydroxyl-funktionalisierte Polyurethan-Prepolymer in JP 2006/182795 ist jedoch kein Hotmelt. In JP 2006/182795 wird das Molekulargewicht der Diole mit 700 nach unten abgegrenzt. Hinweise auf für Haftklebeanwendungen geeignete viskoelastische Eigenschaften werden nicht gegeben.

Hotmelt-Beschichtungsprozesse, die zu vernetzten Polymerfilmen führen, sind zum Beispiel aus DE 10 2004 044 086 A1 bekannt. Dort wird ein Verfahren zur Herstellung eines Klebebandes auf Basis eines Acrylat-Schmelzhaftklebers beschrieben, dem im geschmolzenen Zustand in einem Extruder ein thermischer Vernetzer zugesetzt wird.

Eine Schwierigkeit des dort beschriebenen Verfahrens ist die Notwendigkeit, den Acrylat-Schmelzhaftkleber zunächst in einem Lösemittel polymerisieren zu müssen und dieses Lösemittel anschließend mittels eines Aufkonzentrationsextruders wieder entfernen zu müssen. Ein weiterer Nachteil ist die relativ hohe Molmasse des Polyacrylats (gewichtsgemitteltes $M_w$: 300000 bis 1500000 g/mol). Hohe Molmassen erfordern hohe Verarbeitungstemperaturen und damit hohe Prozesskosten und können außerdem bei Extrusionsprozessen zu ungleichen Polymereigenschaften in Längs- und Querrichtung führen.

Für Hotmelt-Systeme, insbesondere für dicke Schichten, ergibt sich regelmäßig aufgrund der hohen Verarbeitungstemperaturen und der damit verbundenen Einschränkung für thermische Vernetzungsverfahren das Problem, dass - bei Vernetzung der Schichten mit aktinischer Strahlung - aufgrund der dickenbeschränkten Eindringtiefe und dickenabhängige Eindringintensität der Strahlung eine homogene Vernetzung durch die Schicht hindurch nicht möglich ist.

Eine weitere regelmäßige Schwäche bekannter Hotmelt-Systeme besteht darin, dass sie sich nicht in einer Weise vernetzen lassen, dass sie sowohl einer dauerhaften Scherbelastung standhalten, insbesondere bei erhöhten Anwendungstemperaturen, zum Beispiel im Bereich von ca. 50°C bis 70 °C, als auch eine hohe Klebkraft auf unterschiedlichen Substraten aufbauen.

Aufgabe der Erfindung ist es, einen Haftklebstoff zur Verfügung zu stellen, der homogen in einer Weise vernetzt ist, dass er hohe Klebkräfte aufbaut. Vorteilhaft soll der Haftklebstoff im Temperaturbereich bis 70°C dauerhaft einer Scherbelastung standhalten und/oder insbesondere die Nachteile des Standes der Technik vermeiden oder zumindest vermindern.

Insbesondere vorteilhaft soll der Haftklebstoff eines, vorteilhaft mehrere, bevorzugt alle der folgenden Kriterien erfüllen:

Der Haftklebstoff soll wahlweise sowohl lösemittelbasiert herstellbar sein als auch in einem Hotmelt-Beschichtungsprozess lösemittelfrei. Er soll wahlweise sowohl in einem kontinuierlichen Beschichtungsprozess, wie zum Beispiel in einem Extrusionsverfahren, als auch in einem diskontinuierlichen Verfahren herstellbar sein.

Er soll bevorzugt in jedem der genannten, alternativen Beschichtungsprozesse mit konstanter Schichtdicke aufgewickelt werden können, ohne dass der Fortschritt einer chemischen Reaktion während der Beschichtung zunächst abgewartet werden muss.

Er soll als Bestandteil eines Klebebandes sowohl als Haftklebstoffschicht als auch als Träger- oder Funktionsschicht verwendbar sein.

Er soll bei Verwendung als Komponente oder alleiniger Bestandteil einer Haftklebstoffschicht auf unterschiedlichen Substraten eine hohe Klebkraft aufbauen und ebenso einer dauerhaften Scherbelastung standhalten, insbesondere im gehobenenen Temperaturbereich von ca. 50°C bis 70°C. Bei Verwendung als Komponente oder alleiniger Bestandteil einer Träger- oder Funktionsschicht in einem Klebeband soll er ebenfalls dauerhaften Scherbelastungen standhalten und durch seine viskoelastischen Eigenschaften dazu beitragen, die Klebkraft des Klebebandes zu erhöhen.

Sowohl der Speichermodul G' als auch der Verlustmodul G" des Haftklebstoffs sollen zumindest zum Teil im Bereich von $10^3$ Pa bis $10^7$ Pa liegen, ermittelt bei Raumtemperatur im Deformationsfrequenzbereich von $10^0$ bis $10^1$ rad/sec, vorzugsweise im Deformationsfrequenzbereich von $10^{-1}$ bis $10^2$ rad/sec, per Dynamisch Mechanischer Analyse (DMA) mit einem schubspannungsgesteuerten Rheometer in einer Platte/Platte-Anordnung.

Alternativ oder ergänzend soll der Haftklebstoff einen Tack von mindestens 0,1 N aufweisen, ermittelt bei Raumtemperatur mit dem Texture Analyser TA 2 der Firma SMS (Stable Micro Systems) bei Messung mit einem Stahlzylinder mit einem Zylinderradius von 1 mm, einer Andruckgeschwindigkeit des Zylinders auf den zu messenden Stoff von 0,1 mm/s, einer Andruckkraft von 5 N, einer Andruckzeit von 0,01 s und einer Abzugsgeschwindigkeit von 0,6 mm/s.

Vorteilhaft soll der Haftklebstoff als Schicht ausgeformt in Längs- und Querrichtung gleiche Eigenschaften haben.

Gelöst wird diese Aufgabe durch einen Haftklebstoff aus Polyurethan, wie er im Hauptanspruch dargelegt ist. Gegenstand der Unteransprüche sind dabei vorteilhafte Weiterbildungen des Haftklebstoffs. Des Weiteren umfasst die Erfindung Verfahren zum Herstellen des Haftklebstoffs sowie dessen Verwendung.

Demgemäß betrifft die Erfindung einen Haftklebstoff auf Basis von Polyurethan, dadurch gekennzeichnet, dass das Polyurethan das chemische Umsetzungsprodukt aus zumindest folgenden Ausgangsstoffen umfasst:

a) Polyisocyanate umfassend zumindest ein aliphatisches oder alicyclisches Diisocyanat und zumindest ein aliphatisches oder alicyclisches Polyisocyanat mit einer Isocyanat-Funktionalität von drei oder größer drei, wobei der Stoffmengenanteil der aliphatischen oder alicyclischen Polyisocyanate mit einer Isocyanat-Funktionalität von drei oder größer drei an den Polyisocyanaten mindestens 18 Prozent beträgt und

b) zumindest ein haftklebriges, hydroxyl-funktionalisiertes Polyurethan-Prepolymer.

Unter Polyisocyanaten werden in dieser Schrift organische Verbindungen verstanden, die in ihren Molekülen zwei oder mehrere Isocyanatgruppen (-NCO-Gruppen) enthalten. Diisocyanate enthalten zwei Isocyanatgruppen pro Molekül, Polyisocyanate mit einer Isocyanat-Funktionalität von drei sind Triisocyanate und enthalten demzufolge drei Isocyanatgruppen pro Molekül. Polyisocyanate mit einer Isocyanat-Funktionalität von größer drei enthalten entsprechend mehr als drei Isocyanatgruppen pro Molekül. Diisocyanate, Triisocyanate und Polyisocyanate mit einer Isocyanat-Funktionalität von größer drei bilden jeweils eine Untergruppe der Polyisocyanate. Unter dem Stoffmengenanteil der aliphatischen oder alicyclischen Polyisocyanate mit einer Isocyanat-Funktionalität von drei oder größer drei an den Polyisocyanaten wird die relative Anzahl der aliphatischen oder alicyclischen Polyisocyanat-Teilchen mit einer Isocyanat-Funktionalität von drei oder größer drei an der Gesamtteilchenzahl der Polyisocyanate verstanden.

Unter aliphatischen Diisocyanaten werden in dieser Schrift alle Diisocyanate verstanden, in denen die Isocyanatgruppen nicht direkt an einen aromatischen Ring oder an ein aromatisches Ringsystem gebunden sind. Die NCO-Gruppen stehen somit nicht in Konjugation zu einem aromatischen Ring oder Ringsystem. Unter aliphatischen Polyisocyanaten mit einer Isocyanat-Funktionalität von drei oder größer drei werden sinngemäß alle Polyisocyanate mit einer Isocyanat-Funktionalität von drei oder größer drei verstanden, in denen die Isocyanatgruppen nicht direkt an einen aromatischen Ring oder an ein aromatisches Ringsystem gebunden sind.

Unter alicyclischen Polyisocyanaten werden in dieser Schrift alle aliphatischen Polyisocyanate verstanden, in denen mindestens eine NCO-Gruppe an eine ringförmige, aliphatische Kette gebunden ist. Alicyclische Polyisocyanate bilden eine Untergruppe der aliphatischen Polyisocyanate.

Beispiele geeigneter, erfindungsgemäßer Diisocyanate sind Butan-1,4-diisocyanat, Tetramethoxybutan-1,4-diisocyanat, Hexan-1,6-diisocyanat (Hexamethylendiisocyanat, HDI), Bis(4-isocyanatocyclohexyl)-methan (Dicyclohexylmethan-4,4'-diisocyanat), Ethylendiisocyanat, 2,2,4-Trimethyl-hexamethylendiisocyanat, Ethylethylendiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 5-Isocyanato-1-(isocyanatomethyl)-1,3,3-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethylcyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, m-Tetramethyl-xylen-diisocyanat (TMXDI), chlorierte, bromierte, schwefel- oder phosphorhaltige aliphatische oder alicyclische Diisocyanate, Derivate der aufgeführten Diisocyanate, insbesondere dimerisierte oder polymerisierte Typen, die beispielsweise Uretdion- oder Allophonatgruppen enthalten sowie Gemische der genannten Isocyanate.

Besonders geeignet ist das dimere HDI-Uretdion, das mit einem Stoffmengenanteil von 64 Prozent im Desmodur N3400 ® enthalten ist, bei dem es sich wiederum um ein Gemisch mehrerer unterschiedlicher Polyisocyanate handelt, wobei der Stoffmengenanteil aller darin enthaltenen Diisocyanate zusammen insgesamt 83% beträgt.

Geeignete, erfindungsgemäße Polyisocyanate mit einer Isocyanat-Funktionalität von drei oder größer drei sind beispielsweise trimerisierte oder höher oligomerisierte aliphatische oder alicyclische Diisocyanate, wie die trimeren, pentameren oder höher oligomerisierten HDI-Isocyanurate, die im Desmodur N3300 ® oder Desmodur N3600 ® enthalten sind, HDI-Biurete, die im Desmodur N100 ® oder Desmodur N 3200 ® enthalten sind, das Gemisch aus einem HDI-Iminooxadiazindion und einem HDI-Isocyanurat im Desmodur XP 2410 ® oder das IPDI-Isocyanurat, das im Desmodur Z 4470 ® enthalten ist, jeweils von der Firma Bayer sowie Derivate der aufgeführten Polyisocyanate mit einer Isocyanat-Funktionalität von drei oder größer drei oder Gemische davon.

Unter einem hydroxyl-funktionalisierten Polyurethan-Prepolymer wird in dieser Schrift ein endständige Hydroxylgruppen tragender, Urethangruppen enthaltender Stoff verstanden. Er ist das chemische Umsetzungsprodukt eines oder mehrerer Polyole mit zumindest einem Polyisocyanat, wobei die Anzahl der an der Umsetzung zum Polyurethan-Prepolymer beteiligten Hydroxylgruppen größer ist als die Anzahl der Isocyanatgruppen. An der chemischen Umsetzung zum hydroxyl-funktionalisierten Polyurethan-Prepolymer können außer den Polyolen auch andere isocyanatreaktive Stoffe, wie zum Beispiel aminofunktionalisierte Polyether, beteiligt sein.

Es kann erfindungsgemäß auch mehr als ein hydroxyl-funktionalisiertes Polyurethan-Prepolymer in den Ausgangsstoffen vorliegen (z.B. zwei, drei oder mehr Polyurethan-Prepolymere, die insbesondere miteinander als Blend mischbar sind), so dass dann mehr als ein Polyurethan-Prepolymer anwesend sind, die mit den Isocyanaten reagieren können.

Ein hydroxyl-funktionalisiertes Polyurethan-Prepolymer im Sinne dieser Schrift ist nicht vernetzt und somit schmelzbar und / oder in einem geeigneten Lösungsmittel löslich. Diese Eigenschaften werden in dieser Schrift als Bestandteil der grundsätzlichen Definition eines Prepolymers angesehen. In einer vorteilhaften Ausführungsform enthält das hydroxyl-funktionalisierte Polyurethan-Prepolymer verzweigte Molekülketten und hat somit eine Hydroxyl-Funktionalität von größer zwei.

Als Polyole zur Herstellung eines hydroxyl-funktionalisierten Polyurethan-Prepolymers kommen alle bekannten Polyole wie zum Beispiel Polyetherpolyole, insbesondere Polyethylenglykole oder Polypropylenglykole, Polyesterpolyole, Polycarbonatpolyole, Polytetramethylenglykolether (Polytetrahydrofurane), hydrierte und nicht hydrierte hydroxyl-funktionalisierte Polybutadien-Derivate, hydrierte und nicht hydrierte hydroxyl-funktionalisierte Polyisoprene, hydroxyl-funktionalisierte Polyisobutylene, hydroxyl-funktionalisierte Polyolefine oder hydrierte und nicht hydrierte hydroxyl-funktionalisierte Kohlenwasserstoffe in Frage. Bevorzugte Polyole sind Polypropylenglykole. Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, d.h. im Regelfall mit einem basischen Katalysator, wie z.B. Kaliumhydroxid, hergestellten Polypropylenglykole, als auch die besonders reinen Polypropylenglykole, die DMC (Double metal cyanide)-katalysiert hergestellt werden, und deren Herstellung z.B. in US 5,712,216, US 5,693,584, WO 99/56874, WO 99/51661, WO 99/59719, WO 99/64152, US 5,952,261, WO 99/64493 und WO 99/51657 beschrieben wird. Charakteristisch an den DMC-katalysierten Polypropylenglykolen ist, dass die "nominale" bzw. theoretische Funktionalität von exakt 2 im Falle der Diole bzw. exakt 3 im Falle der Triole auch tatsächlich annähernd erreicht wird. Bei den konventionell hergestellten Polypropylenglykolen ist die "wahre" Funktionalität stets etwas geringer als die theoretische, und zwar insbesondere bei Polypropylenglykolen mit höherer Molmasse. Ursache ist eine Umlagerungs-Nebenreaktion des Propylenoxids zum Allylalkohol. Weiterhin können auch alle Polypropylenglykol-Diole bzw. -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Am Aufbau des hydroxyl-funktionalisierten Polyurethan-Hotmelt-Prepolymers können auch andere isocyanatreaktive Stoffe, wie zum Beispiel Polyetheramine beteiligt sein.

Generell werden in dieser Schrift unter isocyanatreaktiven Stoffen alle Stoffe mit aktivem Wasserstoff verstanden. Aktiver Wasserstoff ist definiert als an Stickstoff, Sauerstoff oder Schwefel gebundener Wasserstoff, der mit Methylmagnesiumiodid in Butylethern oder anderen Ethern unter Entstehung von Methan reagiert.

Als Polyole zur Herstellung eines hydroxyl-funktionalisierten Polyurethan-Prepolymers kommen auch Kettenverlängerer in Frage. Kettenverlängerer im Sinne dieser Schrift sind alle gegenüber Isocyanaten reaktiven Verbindungen mit einer Funktionalität von kleiner oder gleich zwei und einer zahlengemittelten, mittleren Molmasse von kleiner oder gleich 500 g/mol. In der Regel sind es difunktionelle Verbindungen mit geringer Molmasse wie zum Beispiel 1,2-Ethandiol, 1,2-Propandiol, 1,3-Propandiol, 2-Methyl-1,3-Propandiol, 1,4-Butandiol, 2,3-Butandiol, Propylenglykol, Dipropylenglykol, 1,4-Cyclohexandimethanol, Hydrochinon-dihydroxyethylether, Ethanolamin, N-Phenyldiethanolamin, oder m-Phenylendiamin. Unter den Begriff Kettenverlängerer fallen aber auch die oben beschriebenen Polyole, insbesondere die Polypropylenglykole, sofern ihre Funktionalität kleiner oder gleich zwei ist und ihre zahlengemittelte, mittlere Molmasse kleiner oder gleich 500 g/mol beträgt.

Auch Vernetzer kommen als Polyole zur Herstellung eines hydroxyl-funktionalisierten Polyurethan-Prepolymers in Frage. Vernetzer sind niedermolekulare, gegenüber Isocyanaten reaktive Verbindungen mit einer Funktionalität größer als zwei. Beispiele für Vernetzer sind Glycerin, Trimethylolpropan, Diethanolamin, Triethanolamin und/oder 1,2,4-Butantriol.

Monofunktionelle, gegenüber Isocyanaten reaktive Stoffe, wie zum Beispiel Monoole können ebenfalls als Polyole eingesetzt werden. Sie dienen als Kettenabbrecher und können somit zur Steuerung der Kettenlängen im hydroxyl-funktionalisiertem Polyurethan-Prepolymer verwendet werden.

Als Polyisocyanate zur Herstellung eines hydroxyl-funktionalisierten Polyurethan-Prepolymers kommen alle bekannten aliphatischen, alicyclischen und / oder aromatischen Polyisocyanate in Frage. Unter aromatischen Polyisocyanaten werden in dieser Schrift alle Polyisocyanate verstanden, in denen eine oder mehrere Isocyanatgruppen direkt an einen aromatischen Ring oder an ein aromatisches Ringsystem gebunden sind. Beispiele für aromatische Polyisocyanate sind Toluylendiisocyanat (TDI) oder Diphenylmethan-4,4'-diisocyanat (MDI) sowie daraus abgeleitete Polyisocyanate wie etwa dimerisierte, trimerisierte oder polymerisierte Typen.

Ein hydroxyl-funktionalisiertes Polyurethan-Prepolymer ist im Sinne dieser Schrift haftklebrig, wenn es nach dem in Berührung bringen mit einem nicht haftklebrigen Substrat oder mit sich selbst und leichtem oder mäßig starkem Andrücken auf dieses Substrat oder auf sich selbst nur mit einer gewissen Kraft von diesem Substrat oder von sich selbst wieder abgelöst werden kann oder wenn eine zerstörungs- oder rückstandsfreie Ablösung dann nicht mehr möglich ist. Haftklebrigkeit ist, wie bereits ausgeführt, mit besonderen, charakteristischen viskoelastischen Eigenschaften des haftklebrigen Stoffes verbunden.

Zur genaueren Beschreibung von Haftklebrigkeit können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das hydroxyl-funktionalisierte Polyurethan-Prepolymer wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor). Die Definition der Winkelfrequenz lautet: $\omega = 2\pi \cdot f$ (f = Frequenz). Die Einheit ist rad/sec.

Eine geeignete Dicke des zu messenden hydroxyl-funktionalisierten Polyurethan-Prepolymers beträgt zwischen 0,9 und 1,1 mm (1 $\pm$ 0,1 mm). Ein geeigneter Probendurchmesser beträgt 25 mm. Die Vorspannung kann mit einer Belastung von 3N erfolgen. Ein Stress des Probenkörpers von 2500 Pa ist geeignet.

Ein hydroxyl-funktionalisiertes Polyurethan-Prepolymer ist im Sinne dieser Schrift haftklebrig, wenn bei Raumtemperatur im Frequenzbereich (Winkelfrequenzbereich) von $10^0$ bis $10^1$ rad/sec, idealerweise im Frequenzbereich von $10^{-1}$ bis $10^2$ rad/sec, G' zumindest zum Teil im Bereich von $10^3$ bis $10^7$ Pa liegt und wenn G" ebenfalls zumindest zum Teil in diesem Bereich liegt.

Eine von vielen ergänzenden oder auch alternativen Möglichkeiten zur Beschreibung von Haftklebrigkeit ist die direkte Messung des Tacks mit Hilfe eines Tackmessgerätes, zum Beispiel des Texture Analysers TA 2 der Firma SMS (Stable Micro Systems). Nach dieser Methode wird ein Stempel ausgewählter geometrischer Form, zum Beispiel ein zylindrischer Stempel aus einem ausgewählten Material, zum Beispiel aus Stahl mit definierter Andruckkraft und -geschwindigkeit auf das zu messende hydroxyl-funktionalisierte Polyurethan-Prepolymer gedrückt und nach definierter Zeit mit definierter Geschwindigkeit wieder abgezogen. Das Prüfergebnis ist die zum Abziehen erforderliche maximal Kraft, angegeben in der Einheit N.

Ein hydroxyl-funktionalisiertes Polyurethan-Prepolymer ist im Sinne dieser Schrift insbesondere haftklebrig, wenn bei Messung mit einem Stahlzylinder mit einem Zylinderradius von 1 mm, einer Andruckgeschwindigkeit des Zylinders auf das zu messende hydroxyl-funktionalisierte Polyurethan-Prepolymer von 0,1 mm/s, einer Andruckkraft von 5 N, einer Andruckzeit von 0,01 s und einer Abzugsgeschwindigkeit von 0,6 mm/s die zum Abziehen des Stempels erforderliche maximale Kraft mindestens 0,1 N beträgt.

Kennzeichnend für haftklebrige Stoffe ist, wie bereits beschrieben, dass, wenn sie mechanisch deformiert werden, es sowohl zu viskosen Fließprozessen als auch zum Aufbau elastischer Rückstellkräfte kommt. Zum Aufbau elastischer Rückstellkräfte kann es aber nur kommen, wenn ein haftklebriger Stoff eine derart hohe Viskosität hat, dass er vom Charakter her eher einem Feststoff ähnelt als einer Flüssigkeit. Ein haftklebriger Stoff im Sinne dieser Schrift ist demzufolge vom Charakter her eher fest als flüssig.

Eine Möglichkeit zur Beschreibung dieses Aspekts von Haftklebrigkeit besteht in der Messung der komplexen Viskosität.

Die komplexe Viskosität kann wie die Größen Speichermodul (G') und Verlustmodul (G") mittels Dynamisch Mechanischer Analyse (DMA) ermittelt werden.

Die Messungen können mit einem schubspannungsgesteuerten Rheometer im Oszillationsversuch bei einer sinusförmig oszillierenden Scherbeanspruchung in einer Platte-Platte-Anordnung erfolgen. Die komplexe Viskosität $\eta^*$ ist folgendermaßen definiert: $\eta^* = G^* / \omega$

$$(G^* = \text{komplexer Schubmodul}, \omega = \text{Winkelfrequenz}).$$

Die weiteren Definitionen lauten: $G^* = \sqrt{(G')^2 + (G'')^2}$

(G" = Viskositätsmodul (Verlustmodul), G' = Elastizitätsmodul (Speichermodul)).

G" = $\tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

G' = $\tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).

$\omega = 2\pi \cdot f$ (f = Frequenz).

Eine bevorzugte Ausführungsform eines haftklebrigen, hydroxyl-funktionalisierten Polyurethan-Prepolymers im Sinne dieser Schrift hat bei Raumtemperatur eine bei einer Oszillationsfrequenz von 10 rad/s gemessene komplexe Viskosität $\eta^*$ von mindestens 8000 Pas, vorzugsweise mindestens 10000 Pas.

Als Raumtemperatur wird in dieser Schrift der Temperaturbereich von 23 °C+/- 2°C verstanden.

Weiterhin hat eine bevorzugte Ausführungsform eines haftklebrigen, hydroxyl-funktionalisierten Polyurethan-Prepolymers im Sinne dieser Schrift eine gewichtsgemittelte, mittlere Molmasse im Bereich von ca. 50000 bis 150000 g/mol. Dieser Bereich korrespondiert mit der bevorzugten komplexen Viskosität $\eta^*$ und erlaubt eine problemlose Beschichtung als Hotmelt, ohne dass merkliche, in den Verwendungen störende, unterschiedliche Eigenschaften der erhaltenen Filme (Schichten) in Längs- und Querrichtung erzeugt werden.

Hinsichtlich der genauen Zusammensetzung eines haftklebrigen, hydroxyl-funktionalisierten Polyurethan-Prepolymers gibt es vielfältige Möglichkeiten. Ein haftklebriges, hydroxyl-funktionalisiertes Polyurethan-Prepolymers ist, wie beschrieben, das chemische Umsetzungsprodukt eines oder mehrerer Polyole mit zumindest einem Polyisocyanat, wobei die Anzahl der an der Umsetzung zum Polyurethan-Prepolymer beteiligten Hydroxylgruppen größer ist als die Anzahl der Isocyanatgruppen. In einer bevorzugten Ausführungsform wird ein haftklebriges, hydroxyl-funktionalisiertes Polyurethan-Prepolymer durch Umsetzung eines Polypropylenglykols mit einer Funktionalität von größer zwei und einer zahlengemittelten mittleren Molmasse von größer oder gleich 3000 g/mol, eines Polypropylenglykols mit einer Funktionalität von kleiner oder gleich zwei und einer zahlengemittelten mittleren Molmasse von kleiner oder gleich 1000 g/mol und eines Kettenverlängerers mit einer Funktionalität von zwei und einer zahlengemittelten mittleren Molmasse von kleiner 500 g/mol mit einem aliphatischen oder alicyclischen Diisocyanat erhalten.

In einer möglichen Ausführungsform enthält der erfindungsgemäße Haftklebstoff sowie das erfindungsgemäße haftklebrige, hydroxyl-funktionalisierte Polyurethan-Prepolymer weitere Additive (Rezeptierungsbestandteile), wie zum Beispiel Füllstoffe, Mikrokugeln, Harze, insbesondere klebrig machende Kohlenwasserstoffharze, Weichmacher, Alterungsschutzmittel (Antioxidantien), Lichtschutzmittel, UV-Schutzmittel, rheologische Additive, sowie sonstige Hilfs- und Zusatzstoffe.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, pyrogene Kieselsäure, Silikate, Zinkoxid, Mikrovollglaskugeln, Mikrohohlglaskugeln und/oder Mikrokunststoffkugeln aller Art. Auch Mischungen der genannten Stoffe können eingesetzt werden.

Die Verwendung von Mikrokugeln führt im Regelfall zu einer in vielen Fällen vorteilhaften schaumartigen Konsistenz des Haftklebstoffs. Ein geschäumter Zustand des Haftklebstoffs kann auch durch andere Maßnahmen erhalten werden, wie zum Beispiel durch das Eintragen von Gas oder durch Gas, das durch eine chemische Nebenreaktionen während der Umsetzung gemäß Anspruch 1 erzeugt wird.

Die Verwendung von Antioxidantien ist vorteilhaft, aber nicht zwingend notwendig.

Zu den geeigneten Antioxidantien zählen zum Beispiel sterisch gehinderte Phenole, Hydrochinon-Derivate, Amine, organische Schwefelverbindungen oder organische Phosphorverbindungen.

Lichtschutzmittel und UV-Absorber können optional ebenso eingesetzt werden.

Als Lichtschutzmittel und UV-Absorbe finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

Beispiele für rheologische Additive, die optional zugesetzt werden können, sind pyrogene Kieselsäuren, Schichtsilikate (Bentonite), hochmolekulare Polyamidpulver oder Rizinusölderivat-Pulver.

Die zusätzliche Verwendung von Weichmachern ist ebenfalls möglich, sollte aber wegen ihrer starken Migrationstendenzen eher vermieden werden.

Um die Reaktion des haftklebrigen, hydroxyl-funktionalisierten Polyurethan-Prepolymers mit den Polyisocyanaten zu beschleunigen, können ein oder mehrere dem Fachmann bekannte Katalysatoren wie zum Beispiel tertiäre Amine, bismut- oder zinnorganische Verbindungen eingesetzt werden, um nur einige zu nennen.

Sehr vorteilhaft können Bismut und Kohlenstoff enthaltende Katalysatoren eingesetzt werden, bevorzugt ein Bismutcarboxylat oder ein Bismutcarboxylat-Derivat.

Die Konzentration der Katalysatoren wird auf die verwendeten Polyisocyanate und Polyole sowie auf die angestrebte Verweilzeit im Mischaggregat, die Temperatur im Mischaggregat und / oder die angestrebte Topfzeit abgestimmt. Im Allgemeinen liegt sie zwischen 0,01 Gew.% und 0,5 Gew.% des herzustellenden Polyurethans.

Die Umsetzung des haftklebrigen, hydroxyl-funktionalisierten Polyurethan-Prepolymers mit den Polyisocyanaten kann sowohl kontinuierlich als auch batchweise erfolgen. Der Begriff kontinuierlich bezieht sich auf die Verfahrensführung und bedeutet, dass während des Mischens die zu mischenden Stoffe ständig und insbesondere mit gleichmäßiger Geschwindigkeit dem Mischaggregat zugeführt, in dieses also eingebracht werden und die Mischung, in der die allmähliche chemische Umsetzung zum Polyurethan voranschreitet, ständig und insbesondere mit gleichmäßiger Geschwindigkeit das Mischaggregat an anderer Stelle verlässt. Im Mischaggregat findet somit während des Mischens ein ständiger, insbesondere gleichmäßiger Fließvorgang und/oder Transportvorgang statt. Die Verweilzeit der Stoffe im Mischaggregat vom Einbringen bis zum Verlassen als chemisch reagierendes Gemisch (insbesondere also die Reaktionszeit des haftklebrigen, hydroxyl-funktionalisierten Polyurethan-Prepolymers mit den Polyisocyanaten vor der Ausformung) übersteigt bevorzugt nicht 10 Minuten und beträgt sehr bevorzugt 2 Sekunden bis 5 Minuten.
Eine kontinuierliche Verfahrensführung bietet sich insbesondere dann an, wenn die Umsetzung zwischen dem haftklebrigen, hydroxyl-funktionalisierten Polyurethan-Prepolymer und den Polyisocyanaten in der Schmelze (insbesondere also lösungsmittelfrei) gestartet wird.

Ein haftklebriges, hydroxyl-funktionalisiertes Polyurethan-Prepolymer wird in dieser Schrift als geschmolzen betrachtet, wenn die Viskosität durch Temperaturerhöhung des haftklebrigen, hydroxyl-funktionalisierten Polyurethan-Prepolymers so weit herabgesetzt ist, dass es in bekannten Mischaggregaten mit den Polyisocyanaten homogen gemischt werden kann. Die Temperaturerhöhung des haftklebrigen, hydroxyl-funktionalisierten Polyurethan-Prepolymers kann dabei durch Beheizung von außen erfolgen oder durch Scherung erzeugt werden. Bekannte Mischaggregate sind beispielsweise Kneter, Innenmischer, Extruder, Planetwalzenextruder, Planetenmischer, Butterfly-Mischer oder Dissolver.
Das kontinuierliche Mischen des geschmolzenen, erfindungsgemäßen, haftklebrigen hydroxyl-funktionalisierten Polyurethan-Prepolymers mit den erfindungsgemäßen Polyisocyanaten erfolgt bevorzugt in einem kontinuierlich arbeitenden Mischaggregat, vorzugsweise in einem Extruder, insbesondere einem Doppelschnecken- oder einem Planetwalzenextruder, oder in einer beheizbaren Zweikomponenten-Misch- und Dosieranlage. Kaskadenschaltungen aus kontinuierlich oder auch diskontinuierlich arbeitenden Mischaggregaten sind ebenfalls geeignet. Das Mischaggregat ist vorzugsweise so konzipiert, dass bei einer kurzen Verweilzeit im Mischaggregat eine gute Durchmischung gewährleistet ist. Die Zugabe des geschmolzenen, erfindungsgemäßen, haftklebrigen hydroxyl-funktionalisierten Polyurethan-Prepolymers und der erfindungsgemäßen Polyisocyanate können in einem Extruder an gleicher Stelle oder auch an unterschiedlichen Stellen erfolgen, vorzugsweise in druckfreien Zonen. Günstig ist, wenn die erfindungsgemäßen Polyisocyanate fein verteilt dem erfindungsgemäßen, haftklebrigen, hydroxyl-funktionalisierten Polyurethan-Prepolymer zugesetzt werden, beispielsweise als Aerosol oder in feinen Tröpfchen.

Das erfindungsgemäße, haftklebrige, hydroxyl-funktionalisierte Polyurethan-Prepolymer kann auch in einer Zweikomponenten-Misch- und Dosieranlage beheizt und im geschmolzenen Zustand als Komponente A temperiert gefördert werden, während die erfindungsgemäßen Polyisocyanate als Komponente B gefördert werden. Die kontinuierliche Durchmischung erfolgt dann in einem dynamischen Mischkopf oder bevorzugt in einem Statik-Mischrohr oder einer Kombination aus dynamischem und statischem Mischverfahren.

Optional können während der kontinuierlichen Durchmischung des erfindungsgemäßen, haftklebrigen, hydroxyl-funktionalisierten Polyurethan-Prepolymers in der Schmelze mit den erfindungsgemäßen Polyisocyanaten weitere Rezeptierungsbestandteile wie zum Beispiel Füllstoffe, Mikrokugeln, Harze, insbesondere klebrig machende Kohlenwasserstoffharze, Weichmacher, Alterungsschutzmittel (Antioxidantien), Lichtschutzmittel, UV-Absorber, rheologische Additive, sowie sonstige Hilfs- und Zusatzstoffe zugemischt werden.

Während und nach der kontinuierlichen Durchmischung des erfindungsgemäßen haftklebrigen, hydroxyl-funktionalisierten Polyurethan-Prepolymers in der Schmelze mit den Polyisocyanaten schreitet die chemische Umsetzung zum Polyurethan kontinuierlich voran. Die Reaktionsgeschwindigkeit ist unkatalysiert oder bei maßvoller Katalyse mit einem geeigneten Katalysator ausreichend langsam, so dass eine thermoplastische Verarbeitung noch eine Zeit lang möglich ist. Während dieser Zeit, die im Regelfall im Minutenbereich liegt, kann das kontinuierliche Ausformen der warmen oder heißen, chemisch reagierenden Mischung zu einem Film erfolgen. Nach dem Ausformen lässt man den Film auf Raumtemperatur abkühlen, wodurch er sich sofort, unabhängig vom Fortschritt der chemischen Reaktion verfestigt. Die Reaktion zum Polyurethan schreitet auch bei Raumtemperatur bis zum Erreichen der Vollständigkeit weiter voran. Die chemische Reaktion zum Polyurethan ist bei Raumtemperatur im Regelfall nach ein bis zwei Wochen vollständig abgeschlossen. Nach vollständiger Umsetzung ist das entstandene Polyurethan im Regelfall chemisch so vernetzt, dass es nicht mehr schmelzbar ist.

Das kontinuierliche Ausformen der warmen oder heißen, chemisch reagierenden Mischung erfolgt bevorzugt mittels eines Walzenauftrags oder einer Extrusionsdüse, kann aber auch mit anderen Auftragsverfahren, wie zum Beispiel einem Kommarakel erfolgen. Der ausgeformte Film wird kontinuierlich auf ein zulaufendes, bahnförmiges Trägermaterial aufgetragen und anschließend aufgewickelt. Das zulaufende, bahnförmige Trägermaterial kann zum Beispiel eine antiadhäsiv ausgerüstete Folie oder ein antiadhäsiv ausgerüstetes Papier sein. Es kann sich aber auch um ein mit einem Haftklebstoff oder einer Funktionsschicht vorbeschichtetes Material oder um einen Träger oder um beliebige Kombinationen der genannten bahnförmigen Materialien handeln.

Sofern das erfindungsgemäße, haftklebrige, hydroxyl-funktionalisierte Polyurethan-Prepolymer bereits Verzweigungen enthält, muss der Fachmann damit rechnen, dass nach Zudosierung der Polyisocyanate zu diesem Prepolymer in der Schmelze, also bei Temperaturen deutlich oberhalb Raumtemperatur, sofortige Gelierung einsetzt, sich also sofort vernetzte Strukturen ausbilden, die eine weitere Durchmischung und anschließende Beschichtung und Ausformung zum Film unmöglich machen. Dass dies nicht eintritt, war für den Fachmann nicht vorhersehbar.

Da durch die Hotmelt-Beschichtung die Aufwickelfähigkeit des Films nicht an das Voranschreiten einer chemischen Reaktion oder die Abdampfgeschwindigkeit eines Lösungsmittels gekoppelt ist, sondern nur an die Schnelligkeit der Abkühlung des Films gebunden ist, können sehr hohe Beschichtungsgeschwindigkeiten erzielt werden, was einen wirtschaftlichen Vorteil darstellt. Es entfallen außerdem die Kosten für die Beheizung einer Wärmekanalstrecke sowie die Kosten für eine Lösemittelverbrennung oder eine Lösemittelrückgewinnung. Da das erfindungsgemäße, haftklebrige, hydroxyl-funktionalisierte Polyurethan-Prepolymer lösemittelfrei hergestellt werden kann, entstehen auch dort keine Kosten für eine Lösemittelverbrennung oder -rückgewinnung.

Durch die Möglichkeit der Lösemittelfreiheit können im Prinzip beliebig dicke Polymerfilme hergestellt werden, ohne dass es zur Blasen- oder Schaumbildung durch abdampfendes Lösungsmittel kommt.

Mit dem erfindungsgemäßen Verfahren können insbesondere sehr homogene (homogen vernetzte) dicke Schichten und homogen vernetzte dreidimensionale Formkörper hergestellt werden. Es lassen sich hervorragend homogene Schichtdicken von über 100 $\mu$m, auch über 200 $\mu$m darstellen.

Das vorstehend dargestellte Verfahren eignet sich insbesondere zur Herstellung viskoelastischer Klebebänder (Einschichtaufbauten oder auch Mehrschichtaufbauten, etwa mit zwei oder drei Schichten) mit Schichtdicken zwischen 100 $\mu$m und 10000 $\mu$m, bevorzugt zwischen 200 $\mu$m und 5000 $\mu$m, mehr bevorzugt zwischen 300 $\mu$m und 2500 $\mu$m.

Da das kontinuierliche Zumischen der die chemische Vernetzung herbeiführenden Polyisocyanate zum erfindungsgemäßen, haftklebrigen, hydroxyl-funktionalisierten Polyurethan- Prepolymer erst kurz vor dem Ausformen der Mischung zum Film erfolgt, ist keine Blockierung reaktiver Gruppen und somit kein Einsatz von Blockierungsmitteln notwendig. Somit werden auch zu keinem Zeitpunkt im Film verbleibende und eventuell in der späteren Anwendung störende Blockierungsmittel freigesetzt.

Das erfindungsgemäße, haftklebrige, hydroxyl-funktionalisierte PolyurethanPrepolymer kann auch in einem Lösungsmittel oder einem Lösungsmittelgemisch hergestellt oder gelagert werden. Ebenso kann es in einem Lösungsmittel oder Lösungsmittelgemisch mit den Polyisocyanaten umgesetzt werden und aus der Lösung heraus während des Beginns der Umsetzungsphase zwischen dem Prepolymer und den Polyisocyanaten beschichtet werden. Geeignete Lösungsmittel sind beispielsweise Methylethylketon, Aceton, Essigsäurebutylester, Dekalin oder Tetrahydrofuran. Überraschend wurde gefunden, dass die Topfzeit der reaktiven Mischung in geeigneten Lösungsmitteln, insbesondere in Aceton, unkatalysiert oder bei maßvoller Katalyse mindestens mehrere Stunden, meist sogar mehrere Tage beträgt. Somit bietet sich für die Umsetzung eines haftklebrigen, hydroxyl-funktionalisierten Polyurethan-Prepolymers mit Polyisocyanten gemäß Anspruch 1 in einem Lösungsmittel ein batchweises Herstellungsverfahren an.

Da die Vernetzung nicht von außen durch Strahlung wie zum Beispiel UV- oder ESH-Strahlung initiiert wird, wird ein Polymeraufbau mit durchgehend homogenen Eigenschaften auch dann erreicht, wenn der hergestellte Film sehr dick ist oder wenn der Film größere Mengen an Füllstoffen enthält. Füllstoffe sind in größeren Mengen von zum Beispiel 50 % und mehr einarbeitbar.

Dadurch, dass das erfindungsgemäße, haftklebrige hydroxyl-funktionalisierte Polyurethan-Prepolymer in aller Regel eine verglichen mit vielen anderen thermoplastisch verarbeitbaren Polymeren geringe gewichtsgemittelte mittlere Molmasse hat, ist es bei vergleichsweise niedrigen Temperaturen schmelzbar und thermoplastisch verarbeitbar. Während und nach dem Ausformen der Schmelze zu einem Film kommt es in aller Regel nicht zu klebtechnisch relevanten Unterschieden des Films in Längs- und Querrichtung.

Gegenstand der Erfindung ist weiterhin ein haftklebriger Formkörper, bevorzugt eine haftklebrige Schicht, umfassend zumindest einen Haftklebstoff auf Basis von Polyurethan wie er in zumindest einem der Ansprüche, insbesondere in Anspruch 1, und/oder wie er vorstehend in dieser Schrift beschrieben wird. Ein derartiger haftklebriger Formkörper kann durch Ausformung des sich mit den Polyisocyanaten umsetzenden haftklebrigen hydroxyl-funktionalisierten Polyurethan-Prepolymers während der Umsetzungsphase erhalten werden. Ein weiterer Gegenstand der Erfindung ist ein Klebeband, umfassend zumindest eine haftklebrige Schicht, enthaltend zumindest einen Haftklebstoff wie er in zumindest einem der Ansprüche, insbesondere in Anspruch 1, und/oder wie er vorstehend in dieser Schrift beschrieben wird.

Überraschend und auch für den Fachmann nicht vorhersehbar erreicht ein Haftklebstoff auf Basis von Polyurethan wie er in zumindest einem der Ansprüche, insbesondere in Anspruch 1, und/oder wie er vorstehend in dieser Schrift beschrieben wird, umfassend das chemische Umsetzungsprodukt aus zumindest folgenden Ausgangsstoffen

a) Polyisocyanate umfassend zumindest ein aliphatisches oder alicyclisches Diisocyanat und zumindest ein aliphatisches oder alicyclisches Polyisocyanat mit einer Isocyanat-Funktionalität von drei oder größer drei, wobei der Stoffmengenanteil der aliphatischen oder alicyclischen Polyisocyanate mit einer Isocyanat-Funktionalität von drei oder größer drei an den Polyisocyanaten mindestens 18 Prozent beträgt und

b) zumindest ein haftklebriges, hydroxyl-funktionalisierten Polyurethan-Prepolymer viskoelastische Eigenschaften, wie sie im Klebebandbereich zur Erzielung hoher Klebkräfte bei gleichzeitig hohen Scherfestigkeiten, insbesondere im gehobenen Temperaturbereich bis 70°C, benötigt werden. Besonders vorteilhafte hohe Klebkräfte bei gleichzeitig hohen Scherfestigkeiten bei 70°C werden überraschend erzielt, wenn der Stoffmengenanteil der aliphatischen oder alicyclischen Polyisocyanate mit einer Isocyanat-Funktionalität von drei oder größer drei an den Polyisocyanaten zwischen mindestens 20 Prozent und höchstens 90 Prozent, bevorzugt zwischen mindestens 25 Prozent und höchstens 70 Prozent beträgt. Ein gewisses Maß an viskosem Fließen ist bekanntlich zum Aufbau von Haftung (Adhäsion) an zu verklebenden Substraten stets notwendig. Ebenso ist ein gewisses Maß an elastischen Rückstellkräften (Kohäsion) notwendig, um Scherbeanspruchungen, insbesondere in der Wärme, widerstehen zu können. Vorteilhafte Haftklebeeigenschaften können nicht nur dann erzielt werden, wenn die Haftklebstoffschicht entsprechend viskoelastisch konzipiert ist, sondern auch, wenn dies für die anderen Schichten eines Klebebandes, wie zum Beispiel die Trägerschicht oder eine Primerschicht zutrifft.

Überraschend und auch für den Fachmann nicht vorhersehbar erweisen sich Verklebungen, die unter Verwendung eines Haftklebstoffs auf Basis von Polyurethan, wie er in zumindest einem der Ansprüche, insbesondere in Anspruch 1, und/oder wie er vorstehend in dieser Schrift beschrieben wird, hergestellt werden, in anwendungstechnischen Prüfungen bis zu einem Temperaturbereich von mindestens - 30°C bis -40°C als exzellent kälteschlagfest. Weiterhin erweisen sich diese Verklebungen unter Last und über einen längeren Zeitraum als sehr vibrationsbeständig. Dies traf sowohl zu, wenn der Haftklebstoff in seiner Funktion als Haftklebstoff eingesetzt wurde als auch dann, wenn der Haftklebstoff als Träger- oder Funktionsschichtschicht in einem Klebeband verwendet wurde.

Überraschend und auch für den Fachmann nicht vorhersehbar werden auch bei dem Vorhandensein einer Verzweigung des erfindungsgemäßen, haftklebrigen, hydroxyl-funktionalisierten Polyurethan-Prepolymers, die nach Umsetzung mit den erfindungsgemäßen Polyisocyanten zur Erzeugung sehr vernetzter Polymerstrukturen führt, besonders vorteilhaft gleichzeitig fließfähige Anteile in für Haftklebeanwendungen ausreichendem Maße mit erzeugt. Dies ist insbesondere auch dann der Fall, wenn die Umsetzung des erfindungsgemäßen, haftklebrigen, hydroxyl-funktionalisierten Polyurethan-Prepolymers mit den erfindungsgemäßen Polyisocyanten in einem NCO/OH-Verhältnis um 1,0 herum erfolgt. Auch höhere NCO/OH-Verhältnisse führen zu vorteilhaften viskoelastischen Eigenschaften im Hinblick auf Haftklebstoffanwendungen. Unter dem NCO/OH-Verhältnis wird hier das Verhältnis der Gesamtanzahl der Isocyanatgruppen der Polyisocyanate zur Gesamtanzahl der für die Reaktion mit den Isocyanatgruppen zur Verfügung stehenden Hydroxylgruppen des haftklebrigen, hydroxyl-funktionalisierten Polyurethan-Prepolymers verstanden. Dieses NCO/OH-Verhältnis wird in dieser Schrift auch mit "NCO/OH Polyisocyanat : Prepo" bezeichnet. Es ist zu unterscheiden vom NCO/OH-Verhältnis aus allen bis dahin im Verlauf der Herstellung des erfindungsgemäßen Haftklebstoffs eingeflossenen NCO- und OH-Gruppen, also auch den OH-Gruppen der Polyole, die in die Prepolymer-Herstellung eingeflossen sind. Dieses NCO/OH-Verhältnis wird in dieser Schrift mit "NCO/OH Gesamt" bezeichnet.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:

Dynamisch Mechanische Analyse (DMA) zur Bestimmung des Speichermoduls G' und des Verlustmoduls G"

Zur Charakterisierung der Haftklebstoffe sowie der haftklebrigen, hydroxyl-funktionalisierten Polyurethan-Prepolymere erfolgten Bestimmungen des Speichermoduls G' und des Verlustmoduls G" mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmodul G" wurden im Frequenzsweep von $10^{-1}$ bis $10^{2}$ rad/sec bei einer Temperatur von 25 °C bestimmt. G' und G" sind folgendermaßen definiert:

G' = $\tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).
G" = $\tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Die Definition der Winkelfrequenz lautet: $\omega = 2\pi \cdot f$ (f = Frequenz). Die Einheit ist rad/sec.
Die Dicke der gemessenen Proben betrug stets zwischen 0,9 und 1,1 mm ($1 \pm 0,1$ mm). Der Probendurchmesser betrug jeweils 25 mm. Die Vorspannung erfolgte mit einer Belastung von 3N. Der Stress der Probenkörper betrug bei allen Messungen 2500 Pa.

Dynamisch Mechanische Analyse (DMA) zur Bestimmung der komplexen Viskosität ($\eta^*$)

Zur Charakterisierung der haftklebrigen, hydroxyl- funktionalisierten Polyurethan-Prepolymere erfolgten Bestimmungen der komplexen Viskosität mittels Dynamisch Mechanischer Analyse (DMA).
Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Die komplexe Viskosität wurde im Temperatursweep von -50 °C bis +250 °C bei einer Oszillationsfrequenz von 10 rad/s bestimmt. Die komplexe Viskosität $\eta^*$ ist folgendermaßen definiert: $\eta^* = G^* / \omega$

$$(G^* = \text{komplexer Schubmodul}, \omega = \text{Winkelfrequenz}).$$

Die weiteren Definitionen lauten: $G^* = \sqrt{(G')^2 + (G'')^2}$

($G''$ = Viskositätsmodul (Verlustmodul), $G'$ = Elastizitätsmodul (Speichermodul)).
$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).
$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).
$\omega = 2\pi \cdot f$ (f = Frequenz).

Die Dicke der gemessenen Proben betrug stets zwischen 0,9 und 1,1 mm (1 $\pm$ 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Tack

Die Tackmessung (Messung der Oberflächenklebrigkeit) erfolgte nach der Stempelmessmethode in Anlehnung an ASTM D 2979-01 mit dem Texture Analyser TA 2 der Firma SMS (Stable Micro Systems). Nach dieser Methode wird ein zylindrischer Stahlstempel mit definierter Andruckkraft und -geschwindigkeit auf die zu untersuchende Probe gedrückt und nach definierter Zeit mit definierter Geschwindigkeit wieder abgezogen. Das Prüfergebnis ist die zum Abziehen erforderliche maximale Kraft, angegeben in der Einheit N.
Die Prüfparameter waren im Einzelnen:

| | |
|---|---|
| Zylinderradius: | 1 mm $\Rightarrow$ Zylinderfläche: 3,14 mm$^2$ |
| Andruckgeschwindigkeit: | 0,1 mm / s |
| Andruckkraft: | 5 N |
| Andruckzeit: | 0,01 s |
| Abzugsgeschwindigkeit: | 0,6 mm / s |
| Temperatur: | 23°C +/- 1°C |
| Rel. Luftfeuchte: | 50% +/- 5% |

Klebkraft

Die Klebkraft wurde nach PSTC-101 bestimmt. Nach dieser Methode wird der zu messende Klebstreifen auf unterschiedliche Haftgründe (Stahl, ABS, PS, PC, PVC) aufgebracht, zweimal mit einem 2kg-Gewicht aufgedrückt und anschließend unter definierten Bedingungen mittels einer Zugprüfmaschine abgezogen. Der Abzugswinkel betrug 90° oder 180°, die Abzugsgeschwindigkeit 300 mm/min. Die zum Abziehen erforderliche Kraft ist die Klebkraft, welche in der Einheit N/cm angegeben wird. Einige der gemessenen Klebstreifen waren mit einer 36 $\mu$m dicken Polyesterfolie rückseitenverstärkt.

Schertest

Der Schertest erfolgte nach der Prüfvorschrift PSTC-107. Nach dieser Methode wurde der zu messende Klebstreifen auf den Haftgrund (Stahl) aufgebracht, viermal mit einem 2kg-Gewicht aufgedrückt und anschließend einer konstanten Scherbelastung ausgesetzt. Ermittelt wird die Haltedauer in Minuten.
Die Verklebungsfläche betrug jeweils 13 x 20 mm². Die Scherbelastung dieser Verklebungsfläche betrug 1 kg. Die Messung erfolgte bei Raumtemperatur (23 °C) und bei 70°C. Einige der gemessenen Klebstreifen waren mit einer 36 $\mu$m dicken Polyesterfolie rückseitenverstärkt.

Dicke

Die Dickenmessungen erfolgten nach der Prüfvorschrift PSTC-33 mit einem Dickenmessgerät der Firma Wolf-Messtechnik GmbH. Die Auflagekraft der Scheibe auf den zu messenden Klebstreifen betrug 0,3 N oder 4 N. Die Scheibe hatte einen Durchmesser von 10mm.

Die haftklebrigen, hydroxyl-funktionalisierten Polyurethan-Prepolymere wurden in einem üblichen beheiz- und evakuierbaren Mischkessel mit Dissolver-Rührwerk der Firma Molteni gefertigt. Während des jeweils ca. zweistündigen Mischvorgangs wurde die Temperatur der Mischung auf ca. 70 °C bis 100 °C eingestellt. In den Fällen, in denen lösungsmittelfrei gearbeitet wurde, wurde zur Entgasung der Komponenten Vakuum angelegt.

Das Umsetzen der erfindungsgemäßen haftklebrigen, hydroxyl-funktionalisierten Polyurethan-Prepolymere mit den erfindungsgemäßen Polyisocyanaten erfolgte in den Fällen, in denen das haftklebrige, hydroxyl-funktionalisierte Polyurethan-Prepolymer lösungsmittelfrei verwendet wurde, in einem Doppelschneckenextruder der Firma Leistritz, Deutschland, Bez LSM 30/34. Das Aggregat wurde von außen auf ca. 70 °C bis 90 °C elektrisch beheizt und über verschiedene Gebläse luftgekühlt und war so konzipiert, dass eine gute Durchmischung von Prepolymer und Polyisocyanaten bei kurzer Verweilzeit im Extruder gewährleistet war. Dazu wurden die Mischwellen des Doppelschneckenextruders so angeordnet, dass sich fördernde und mischende Elemente abwechselten. Die Zugabe der jeweiligen Polyisocyanate erfolgte mit geeignetem Dosierequipment unter Verwendung von Dosierhilfsmitteln in die druckfreien Förderzonen des Doppelschneckenextruders.

Nach Austritt der chemisch reagierenden, ca. 80 °C heißen Mischung aus dem Doppelschneckenextruder (Austritt: Runddüse 5 mm Durchmesser) erfolgte die Ausformung zum Film direkt mittels eines nachgeschalteten Zweiwalzenauftragswerks zwischen zwei zulaufenden, beidseitig silikonisierten 50 $\mu$m dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Somit lag nun ein aufwickelbarer Film (Schicht) vor.

Ein Teil der auf sililkonisierter Polyesterfolie vorliegenden aufgewickelten Filme (Schichten) wurde nach zwei Wochen Lagerzeit bei Raumtemperatur wieder abgewickelt und gegen den auf silikonisierter Polyesterfolie in einer Dicke von 50 $\mu$m fertig ausgestrichen vorliegenden Polyacrylat-Haftklebstoff Durotac 280-1753 der Firma National Starch kaschiert. Die Kaschierung erfolgte ohne weitere Vorbehandlung. Die Versuche mit dem Polyacrylat-Haftklebstoff dienten der Erprobung der Verwendung als Träger- oder als Funktionsschicht in einem Klebeband.

In einem Teil der Versuche wurden die erfindungsgemäßen, haftklebrigen, hydroxyl-funktionalisierten Polyurethan-Prepolymere vor der Verwendung in Aceton aufgelöst. Der Anteil an Aceton betrug dabei stets 40 Gew.%. Das Umsetzen der erfindungsgemäßen, haftklebrigen, hydroxyl-funktionalisierten Polyurethan-Prepolymere mit den erfindungsgemäßen Polyisocyanaten erfolgte dann in einem üblichen beheiz- und evakuierbaren Mischkessel mit Dissolver-Rührwerk der Firma Molteni bei Raumtemperatur. Die Mischzeit betrug 15 bis 30 Minuten. Eine solche chemisch reagierende Mischung aus einem haftklebrigen, hydroxyl-funktionalisierten Polyurethan-Prepolymer mit den erfindungsgemäßen Polyisocyanaten in Aceton war bei Katalysator-Gehalten zwischen 0,05 % und 0,2 % in der Regel ungefähr 24 bis 48 Stunden beschichtbar, bis es zur allmählichen Gelierung kam.

In Tabelle 1 sind die zur Herstellung des Haftklebstoffs auf Basis von Polyurethan verwendeten Basismaterialien aufgeführt, und zwar jeweils mit Handelsnamen und Hersteller. Die genannten Rohstoffe sind alle frei im Handel erhältlich.

Tabelle 1: Zur Herstellung der chemisch vernetzten Polyurethan-Filme eingesetzte Basismaterialien

| Handelsname | Chemische Basis | mittlere zahlenge-mittelte Molmasse $M_n$ (g/mol) | OH- bzw. NCO-Zahl (mmol OH/kg bzw. mmol NCO/kg | Hersteller / Lieferant |
|---|---|---|---|---|
| Voranol P 400 ® | Polypropylenglykol, Diol | 400 | 4643 | Dow |
| Voranol 2000L ® | Polypropylenglykol, Diol | 2000 | 989 | Dow |

(fortgesetzt)

| Handelsname | Chemische Basis | mittlere zahlenge-mittelte Molmasse $M_n$ (g/mol) | OH- bzw. NCO-Zahl (mmol OH/kg bzw. mmol NCO/kg | Hersteller / Lieferant |
|---|---|---|---|---|
| Voranol CP 6055 ® | Polypropylenglykol, Triol | 6000 | 491 | Dow |
| MPDiol ® | 2-Methyl-1,3-propandiol | 90,12 | 22193 | Lyondell |
| Vestanat IPDI ® | Isophorondüsocyanat (IPDI) | | 8998 | Degussa |
| Desmodur W ® | Dicyclohexylmethandiiso-cyanat | | 7571 | Bayer |
| Desmodur N 3400 ® | Gemisch aus aliphatischen Polyisocyanaten auf Basis Hexamethylendiisocyanat , Diisocyanat-Anteil: 83 % (Stoffmengenanteil) | | 5190 | Bayer |
| Desmodur N 3300 ® | Gemisch aus aliphatischen Polyisocyanaten auf Basis Hexamethylendiisocyanat mit einer Isocyanat-Funktionalität von jeweils drei oder größer drei | | 5190 | Bayer |
| Tinuvin 292 ® | sterisch gehindertes Amin, Licht- und Alterungsschutzmittel | | | Ciba |
| Tinuvin 400 ® | Triazin-Derivat, UV-Schutzmittel | | | Ciba |
| Coscat 83 ® | Bismuttrisneodecanoat CAS-Nr. 34364-26-6 | | | Caschem |
| Aerosil R 202 ® | Pyrogene Kieselsäure, hydrophobiert | | | Evonik |
| Expancel 092 DETX 100 d25® | Vorexpandierte Mikrosphären, durchschnittliche Partikelgröße 100 $\mu$m, Dichte: 25 kg/m$^3$ | | | Akzo Nobel |

**Beispiele**

**Beispiel 1**

Das haftklebrige, hydroxyl-funktionalisierte Polyurethan-Prepolymer wurde durch homogenes Mischen und somit chemisches Umsetzen der folgenden Ausgangsstoffe in den angegebenen Mengenverhältnissen hergestellt:

Tabelle 2: Zusammensetzung des haftklebrigen, hydroxyl-funktionalisierten Polyurethan-Prepolymers, Beispiel 1

| Ausgangsstoff | Gewichts-anteil (Gew.%) | Stoffmengen OH- bzw. NCO-Gruppen, die dem jeweiligen Gewichtsanteil entsprechen (mmol OH bzw. mmol NCO) | Prozentuales Verhältnis der Anzahl der OH-Gruppen zueinander | Prozentuales Verhältnis der Anzahl der OH-Gruppen tragenden Moleküle zueinander (idealisiert)* |
|---|---|---|---|---|
| Voranol P 400 ® | 17,32 | 80,4 | 41,0 | 42,3 |
| VoranolCP 6055 ® | 35,97 | 17,7 | 9,0 | 6,1 |
| MP Diol ® | 3,63 | 80,4 | 41,0 | 42,3 |
| Voranol 2000L ® | 17,86 | 17,7 | 9,0 | 9,3 |
| Tinuvin 400 ® | 0,63 | | | |
| Tinuvin 292 ® | 0,31 | | | |
| Coscat 83 ® | 0,21 | | | |
| Aerosil R202 ® | 2,10 | | | |
| Expancel 551 DE 80 d42 ® | 1,89 | | | |
| Summe | | 196,2 | 100,0 | 100,0 |
| | | | | |
| Vestanat IPDI ® | 20,09 | 180,7 | | |
| Summe | 100,0 | | | |
| *errechnet aus den Gewichtsanteilen und den OH-Zahlen beziehungsweise NCO-Zahlen der Ausgangsstoffe unter der stark idealisierten Annahme, dass das Voranol P400 und das Voranol 2000 L exakt die Funktionalität 2 haben und das Voranol CP 6055 exakt die Funktionalität 3 hat. | | | | |

Zunächst wurden alle aufgeführten Ausgangsstoffe außer dem MP Diol und dem Vestanat IPDI bei einer Temperatur von 70 °C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis des Prepolymers betrug 0,92. 100g des haftklebrigen, hydroxyl-funktionalisierten Polyurethan-Prepolymers enthalten 15,5 mmol OH-Gruppen. 9,0 % der zur Bildung des haftklebrigen, hydroxyl-funktionalisierten Polyurethan-Prepolymers eingebrachten Hydroxylgruppen stammen von einem Polypropylenglykol mit einer Funktionalität von größer zwei und einer zahlengemittelten mittleren Molmasse von 6000 g/mol. Somit sind ca. 6,1% der OH-Gruppen tragenden Ausgangsstoffmoleküle trifunktionell.

Das entstandene Prepolymer war bei Raumtemperatur haftklebrig.
Die komplexe Viskosität $\eta$* betrug bei Raumtemperatur (23 °C) 16000 Pas. Das entstandene Prepolymer war schmelzbar. Weitere Daten:

G' (bei $10^0$ rad/sec und 23°C): 0,02 MPa
G" (bei $10^0$ rad/sec und 23°C): 0,04 MPa
G' (bei $10^1$ rad/sec und 23°C): 0,1 MPa
G" (bei $10^1$ rad/sec und 23°C): 0,2 Mpa
Tack: 6,5 N

Für einen Teil der Versuche wurde es in Aceton gelöst.
Das haftklebrige, hydroxyl-funktionalisierte Polyurethan-Prepolymer wurde jeweils mit den folgenden erfindungsgemäßen Polyisocyanat-Gemischen zum erfindungsgemäßen Haftklebstoff umgesetzt:

Beispiel 1a

Tabelle 3: Zusammensetzung des Polyisocyanat-Gemisches Beispiel 1a

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur N3400 | 89,4 | 464 | 177,5 | 36,4 |
| Desmodur N3300 | 10,6 | 55 | - | 18,3 |
| Summe | 100,0 | 519 | 177,5 | 54,7 |
| * idealisierte Betrachtung: Funktionalitäten von größer drei werden in die Berechnungen nicht mit einbezogen. | | | | |

Anteil Triisocyanat am Polyisocyanat-Gemisch: 23,6 % (Stoffmengenanteil)

Beispiel 1b

Tabelle 4: Zusammensetzung des Polyisocyanat-Gemisches Beispiel 1b

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur N3400 | 36,4 | 188,9 | 72,3 | 14,8 |
| Desmodur N3300 | 63,6 | 330,1 | - | 110.0 |
| | | | | |
| Summe | 100,0 | 519,0 | 72,3 | 124,8 |
| * idealisierte Betrachtung: Funktionalitäten von größer drei werden in die Berechnungen nicht mit einbezogen. | | | | |

Anteil Triisocyanat am Polyisocyanat-Gemisch: 63,3 % (Stoffmengenanteil)

Beispiel 1c

Tabelle 5: Zusammensetzung des Polyisocyanat-Gemisches Beispiel 1c

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur W | 43,4 | 329 | 164,5 | - |
| Desmodur N3300 | 56,6 | 294 | - | 98 |
| | | | | |

(fortgesetzt)

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Summe | 100,0 | 623 | 164,5 | 98 |

| * idealisierte Betrachtung: Funktionalitäten von größer drei werden in die Berechnungen nicht mit einbezogen. |
|---|

Anteil Triisocyanat am Polyisocyanat-Gemisch: 37,3 % (Stoffmengenanteil)

Zur Herstellung eines Haftklebstoffs wurde das in Aceton gelöste Prepolymer bei Raumtemperatur mit dem Polyisocyanat-Gemisch (Beispiele 1a bis 1c) gemischt. Die jeweiligen Mischungsverhältnisse sind in Tabelle 6 aufgeführt. Das NCO/OH-Verhältnis aus allen bis dahin im Verlauf der Herstellung eingeflossenen NCO- und OH-Gruppen (in der Tabelle und im Folgenden mit "NCO/OH Gesamt" bezeichnet) betrug jeweils 1,05. Ein Großteil der ursprünglich vorhandenen OH-Gruppen wurde bereits zur Umsetzung zum Prepolymer verbraucht. Für die Reaktion mit dem Polyisocyanat standen, bezogen auf die in Tabelle 2 aufgeführten Gewichtsanteile noch 15,5 mmol OH zur Verfügung. Das Verhältnis der Gesamtanzahl der Isocyanat-Gruppen der Polyisocyanate zur Gesamtanzahl der für die Reaktion mit den Isocyanatgruppen zur Verfügung stehenden Hydroxylgruppen des haftklebrigen, hydroxyl-funktionalisierten Polyurethan-Prepolymers betrug stets 1,6. Dieses NCO/OH-Verhältnis wird in der Tabelle und im Folgenden mit "NCO/OH Polyisocyanat : Prepo" bezeichnet. Die Mischungen wurden auf eine 25 $\mu$m dicke Polyesterfolie beschichtet. Das Lösungsmittel wurde bei 70 °C abgedampft. Es wurde eine 50 $\mu$m dicke Schicht auf Polyesterfolie erhalten, die mit den beschriebenen Prüfmethoden charakterisiert wurde.

Zur Herstellung eines Haftklebstoffs mit dem Verwendungsziel als Träger eines Klebebandes wurde das Prepolymer jeweils einem auf 80 °C vorgeheizten Doppelschneckenextruder kontinuierlich zugeführt. Das Polyisocyanat-Gemisch (Beispiele 1a bis 1c) wurde gleichzeitig mit dem Prepolymer und an gleicher Stelle wie das Prepolymer dem Doppelschneckenextruder kontinuierlich zudosiert. Als zudosiertes Polyisocyanat-Gemisch fand jeweils eines der Polyisocyanat-Gemische aus den Beispielen 1a bis 1c Verwendung.

Es wurde stets wieder ein NCO/OH GesamtVerhältnis von 1,05 eingestellt.

Die ie Mischungsverhältnisse sind wieder Tabelle 6 zu entnehmen.

Es wurde kontinuierlich gemischt und gefördert. Die Zeit bis zum Austritt des Extrudats aus dem Extruder betrug jeweils ca. zwei Minuten.

Das Extrudat wurde jeweils direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug jeweils 1,0 mm. Der Film wurde jeweils nach Abkühlung auf Raumtemperatur aufgewickelt, nachdem zuvor jeweils eine der beiden silikonisierten Polyesterfolien entfernt wurde. Der aufgewickelte Film wurde jeweils zwei Wochen bei Raumtemperatur gelagert.

Anschließend wurde er jeweils zum Teil wieder abgewickelt und jeweils gegen den auf silikonisierter Polyesterfolie in einer Dicke von 50 $\mu$m fertig ausgestrichen vorliegenden Polyacrylat-Haftklebstoff Durotac 280-1753 der Firma National Starch kaschiert. Die Kaschierung erfolgte jeweils ohne Vorbehandlung. Die Versuche mit dem Polyacrylat-Haftklebstoff dienten jeweils der Erprobung der Verwendung des Haftklebstoffs als Träger- oder als Funktionsschicht in einem Klebeband. Dieser Verbund wurde jeweils ebenfalls mit den beschriebenen Prüfmethoden charakterisiert. Außerdem wurde jeweils auch der nicht abgewickelte Teil des Films als einschichtiges, 1 mm dickes Klebeband mit den beschriebenen Prüfmethoden charakterisiert. In diesem Fall war der Haftklebstoff jeweils in Doppelfunktion gleichzeitig Träger und Haftklebstoff.

Tabelle 6: Mischungsverhältnisse Polyisocyanat-Gemisch : Prepolymer

| | Beispiel 1a | Beispiel 1b | Beispiel 1c |
|---|---|---|---|
| Mischungsverhältnis Polyisocyanat-Gemisch : Prepolymer | 100 : 4,86 (Gewichtsteile) | 100 : 4,86 (Gewichtsteile) | 100 : 4,06 (Gewichtsteile) |
| NCO/OH Gesamt | 1,05 | 1,05 | 1,05 |
| NCO/OH Polyisocyanat : Prepo | 1,6 | 1,6 | 1,6 |

Prüfergebnisse:

Tabelle 7: Prüfergebnisse, Beispiel 1a

| | Beispiel 1a | | |
|---|---|---|---|
| | PU-Haftklebstoff, Dicke: 50$\mu$m auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| G' (bei $10^0$ rad/sec und 23°C) | | | 0,1 MPa |
| G" (bei $10^0$ rad/sec und 23°C) | | | 0,03 MPa |
| G' (bei $10^1$ rad/sec und 23°C) | | | 0,18 Mpa |
| G" (bei $10^1$ rad/sec und 23°C) | | | 0,09 MPa |
| Tack | | | 5,3 N |
| Klebkraft, Stahl, 300 mm/min | 5,3 N/cm (Abzugswinkel: 180°) | 21,4 N/cm (Rückseitenverstärkung, Abzugswinkel: 90°) | 11,3 N/cm (Rückseitenverstärkung, Abzugswinkel: 90°) |
| Klebkraft, ABS, 300 mm/min | 4,8 N/cm (Abzugswinkel: 180°) | 20,2 N/cm (Rückseitenverstärkung, Abzugswinkel: 90°) | 10,4 N/cm (Rückseitenverstärkung, Abzugswinkel: 90°) |
| Klebkraft, PS, 300 mm/min | 5,1 N/cm (Abzugswinkel: 180°) | 22,1 N/cm (Rückseitenverstärkung, Abzugswinkel: 90°) | 9,3 N/cm (Rückseitenverstärkung, Abzugswinkel: 90°) |
| Klebkraft, PC, 300 mm/min | 5,7 N/cm (Abzugswinkel: 180°) | 19,0 N/cm (Rückseitenverstärkung, Abzugswinkel: 90°) | 10,8 N/cm (Rückseitenverstärkung, Abzugswinkel: 90°) |
| Klebkraft, PVC, 300 mm/min (N/cm) | 4,3 N/cm (Abzugswinkel: 180°) | 21,9 N/cm (Rückseitenverstärkung, Abzugswinkel: 90°) | 11,0 N/cm (Rückseitenverstärkung, Abzugswinkel: 90°) |
| Haltezeit im Schertest bei Raumtemperatur, Belastung 1 kg | >10000 min | >10000 min (Rückseitenverstärkung) | >10000 min (Rückseitenverstärkung) |
| Haltezeit im Schertest bei 70°C, Belastung 1 kg | >10000 min | >10000 min (Rückseitenverstärkung) | >10000 min (Rückseitenverstärkung) |

Die Klebkraft des Haftklebstoffs Durotac280-1753, aufgetragen als 50 $\mu$m dicke Schicht auf eine 25 $\mu$m dicke Polyesterfolie, betrug zum Vergleich 5,9 N/cm.
Alle Muster zeigten in Längs- und Querrichtung gleiche Eigenschaften.
Die Dickenkonstanz der Muster war gegeben. Bei den 1,0mm dicken Mustern betrug die Standardabweichung der Dicke 0,03 mm.
Verklebungen mit Mustern aus dem Dreischichtaufbau Durotac 280-1753 / PU-Haftklebstoff (Dicke: 1,0 mm) / Durotac 280-1753 und aus dem Einschichtaufbau wurden anwendungstechnischen Prüfungen unterworfen.
Im Temperaturbereich von -30°C bis -40°C erwiesen sie sich als exzellent kälteschlagfest. Weiterhin erweisen sich diese Verklebungen unter Last und über einen längeren Zeitraum als sehr vibrationsbeständig.

Tabelle 8: Prüfergebnisse, Beispiel 1b

| | Beispiel 1b | | |
|---|---|---|---|
| | PU-Haftklebstoff, Dicke: 50µm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| G' (bei $10^0$ rad/sec und 23°C) | | | 0,2 MPa |
| G" (bei $10^0$ rad/sec und 23°C) | | | 0,05 MPa |
| G' (bei $10^1$ rad/sec und 23°C) | | | 0,23 Mpa |
| G" (bei $10^1$ rad/sec und 23°C) | | | 0,17 MPa |
| Tack | | | 4,1 N |
| Klebkraft, Stahl, 300 mm/min | 4,1 N/cm (Abzugswinkel: 180°) | 17,8 N/cm (Rückseitenverstärkung, Abzugswinkel: 90°) | 9,3 N/cm (Rückseitenverstärkung, Abzugswinkel: 90°) |
| Klebkraft, ABS, 300 mm/min | 3,9 N/cm (Abzugswinkel: 180°) | 17,2 N/cm (Rückseitenverstärkung, Abzugswinkel: 90°) | 9,6 N/cm (Rückseitenverstärkung, Abzugswinkel: 90°) |
| Klebkraft, PS, 300 mm/min | 4,8 N/cm (Abzugswinkel: 180°) | 16,1 N/cm (Rückseitenverstärkung, Abzugswinkel: 90°) | 9,2 N/cm (Rückseitenverstärkung, Abzugswinkel: 90°) |
| Klebkraft, PC, 300 mm/min | 5,4 N/cm (Abzugswinkel: 180°) | 18,9 N/cm (Rückseitenverstärkung, Abzugswinkel: 90°) | 10,9 N/cm (Rückseitenverstärkung, Abzugswinkel: 90°) |
| Klebkraft, PVC, 300 mm/min (N/cm) | 4,6 N/cm (Abzugswinkel: 180°) | 16,2 N/cm (Rückseitenverstärkung, Abzugswinkel: 90°) | 9,0 N/cm (Rückseitenverstärkung, Abzugswinkel: 90°) |
| Haltezeit im Schertest bei Raumtemperatur, Belastung 1 kg | >10000 min | >10000 min (Rückseitenverstärkung) | >10000 min (Rückseitenverstärkung) |
| Haltezeit im Schertest bei 70°C, Belastung 1 kg | >10000 min | >10000 min (Rückseitenverstärkung) | >10000 min (Rückseitenverstärkung) |

Die Klebkraft des Haftklebstoffs Durotac280-1753, aufgetragen als 50 µm dicke Schicht auf eine 25 µm dicke Polyesterfolie, betrug zum Vergleich 5,9 N/cm.
Alle Muster zeigten in Längs- und Querrichtung gleiche Eigenschaften.
Die Dickenkonstanz der Muster war gegeben. Bei den 1,0mm dicken Mustern betrug die Standardabweichung der Dicke 0,03 mm.
Verklebungen mit Mustern aus dem Dreischichtaufbau Durotac 280-1753 / PU-Haftklebstoff (Dicke: 1,0 mm) / Durotac 280-1753 und aus dem Einschichtaufbau wurden anwendungstechnischen Prüfungen unterworfen.
Im Temperaturbereich von -30°C bis -40°C erwiesen sie sich als exzellent kälteschlagfest. Weiterhin erweisen sich diese Verklebungen unter Last und über einen längeren Zeitraum als sehr vibrationsbeständig.

Tabelle 9: Prüfergebnisse, Beispiel 1c

| | Beispiel 1c | | |
|---|---|---|---|
| | PU-Haftklebstoff, Dicke: 50 μm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| G' (bei $10^0$ rad/sec und 23°C) | | | 0,12 MPa |
| G" (bei $10^0$ rad/sec und 23°C) | | | 0,04 MPa |
| G' (bei $10^1$ rad/sec und 23°C) | | | 0,20 Mpa |
| G" (bei $10^1$ rad/sec und 23°C) | | | 0,14 MPa |
| Tack | | | 6,7 N |
| Klebkraft, Stahl, 300 mm/min | 5,7 N/cm (Abzugswinkel: 180°) | 24,1 N/cm (Rückseitenverstärkung, Abzugswinkel: 90°) | 1753 N/cm (Rückseitenverstärkung, Abzugswinkel: 90°) |
| Klebkraft, ABS, 300 mm/min | 5,1 N/cm (Abzugswinkel: 180°) | 25,2 N/cm (Rückseitenverstärkung, Abzugswinkel: 90°) | 14,8 N/cm (Rückseitenverstärkung, Abzugswinkel: 90°) |
| Klebkraft, PS, 300 mm/min | 4,1 N/cm (Abzugswinkel: 180°) | 24,7 N/cm (Rückseitenverstärkung, Abzugswinkel: 90°) | 15,3 N/cm (Rückseitenverstärkung, Abzugswinkel: 90°) |
| Klebkraft, PC, 300 mm/min | 4,8 N/cm (Abzugswinkel: 180°) | 23,9 N/cm (Rückseitenverstärkung, Abzugswinkel: 90°) | 15,0 N/cm (Rückseitenverstärkung, Abzugswinkel: 90°) |
| Klebkraft, PVC, 300 mm/min (N/cm) | 3,3 N/cm (Abzugswinkel: 180°) | 24,0 N/cm (Rückseitenverstärkung, Abzugswinkel: 90°) | 12,1 N/cm (Rückseitenverstärkung, Abzugswinkel: 90°) |
| Haltezeit im Schertest bei Raumtemperatur, Belastung 1 kg | >10000 min | >10000 min (Rückseitenverstärkung) | >10000 min (Rückseitenverstärkung) |
| Haltezeit im Schertest bei 70°C, Belastung 1 kg | >10000 min | >10000 min (Rückseitenverstärkung) | >10000 min (Rückseitenverstärkung) |

Die Klebkraft des Haftklebstoffs Durotac280-1753, aufgetragen als 50 μm dicke Schicht auf eine 25 μm dicke Polyesterfolie, betrug zum Vergleich 5,9 N/cm.
Alle Muster zeigten in Längs- und Querrichtung gleiche Eigenschaften.
Die Dickenkonstanz der Muster war gegeben. Bei den 1,0mm dicken Mustern betrug die Standardabweichung der Dicke 0,03 mm.

Die Dicke betrug bei den 1,0 mm-Mustern stets 1,0 +/- 0,05 mm.
Verklebungen mit Mustern aus dem Dreischichtaufbau Durotac 280-1753 / PU-Haftklebstoff (Dicke: 1,0 mm) / Durotac 280-1753 und aus dem Einschichtaufbau wurden anwendungstechnischen Prüfungen unterworfen.
Im Temperaturbereich von -30°C bis -40°C erwiesen sie sich als exzellent kälteschlagfest. Weiterhin erweisen sich diese Verklebungen unter Last und über einen längeren Zeitraum als sehr vibrationsbeständig.

Beispiel 2

Das haftklebrige, hydroxyl-funktionalisierte Polyurethan-Prepolymer wurde durch homogenes Mischen und

somit chemisches Umsetzen der folgenden Ausgangsstoffe in den angegebenen Mengenverhältnissen hergestellt:

Tabelle 10: Zusammensetzung des haftklebrigen, hydroxyl-funktionalisierten Polyurethan-Prepolymers, Beispiel 2

| Ausgangsstoff | Gewichts-anteil (Gew.%) | Stoffmengen OH- bzw. NCO-Gruppen, die dem jeweiligen Gewichtsanteil entsprechen (mmol OH bzw. mmol NCO) | Prozentuales Verhältnis der Anzahl der OH-Gruppen zueinander | Prozentuales Verhältnis der Anzahl der OH-Gruppen tragenden Moleküle zueinander (idealisiert)* |
|---|---|---|---|---|
| Voranol P 400 ® | 38,92 | 180,7 | 65,5 | 67,6 |
| VoranolCP 6055 ® | 27,68 | 13,6 | 5,0 | 3,4 |
| MP Diol ® | 3,49 | 77,4 | 28,5 | 29,0 |
| | | | | |
| Tinuvin 400 ® | 0,63 | | | |
| Tinuvin 292 ® | 0,32 | | | |
| Coscat 83 ® | 0,21 | | | |
| | | | | |
| | | | | |
| Summe | | 271,7 | 100 | 100 |
| | | | | |
| Vestanat IPDI ® | 28,75 | 258,7 | | |
| Summe | 100,0 | | | |

*errechnet aus den Gewichtsanteilen und den OH-Zahlen beziehungsweise NCO-Zahlen der Ausgangsstoffe unter der stark idealisierten Annahme, dass das Voranol P400 exakt die Funktionalität 2 und das Voranol CP 6055 exakt die Funktionalität 3 hat.

Zunächst wurden alle aufgeführten Ausgangsstoffe außer dem MP Diol und dem Vestanat IPDI bei einer Temperatur von 70 °C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis des Prepolymers betrug 0,95. 100g des haftklebrigen, hydroxyl-funktionalisierten Polyurethan-Prepolymers enthalten 13,0 mmol OH-Gruppen. 5,0 % der zur Bildung des haftklebrigen, hydroxyl-funktionalisierten Polyurethan-Prepolymers eingebrachten Hydroxylgruppen stammen von einem Polypropylenglykol mit einer Funktionalität von größer zwei und einer zahlengemittelten mittleren Molmasse von 6000 g/mol. Somit sind ca. 3,4 % der OH-Gruppen tragenden Ausgangsstoffmoleküle trifunktionell.

Das entstandene Prepolymer war bei Raumtemperatur haftklebrig.

Die komplexe Viskosität $\eta$* betrug bei Raumtemperatur (23 °C) 35000 Pas. Das entstandene Prepolymer war schmelzbar. Weitere Daten:

G' (bei $10^0$ rad/sec und 23°C): 0,02 MPa
G" (bei $10^0$ rad/sec und 23°C): 0,04 MPa
G' (bei $10^1$ rad/sec und 23°C): 0,10 MPa
G" (bei $10^1$ rad/sec und 23°C): 0,13 Mpa
Tack: 6,8 N

Für einen Teil der Versuche wurde es in Aceton gelöst.

Das haftklebrige, hydroxyl-funktionalisierte Polyurethan-Prepolymer wurde jeweils mit den folgenden erfindungsgemäßen Polyisocyanat-Gemischen zum erfindungsgemäßen Haftklebstoff umgesetzt:

Beispiel 2a

Tabelle 11: Zusammensetzung des Polyisocyanat-Gemisches Beispiel 2a

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur N3400 | 66,7 | 346 | 132,3 | 27,1 |
| Desmodur N3300 | 33,3 | 173 | - | 57,7 |
| Summe | 100,0 | 519 | 132,3 | 84,8 |
| * idealisierte Betrachtung: Funktionalitäten von größer drei werden in die Berechnungen nicht mit einbezogen. | | | | |

Anteil Triisocyanat am Polyisocyanat-Gemisch: 39,1 % (Stoffmengenanteil)

Beispiel 2b

Tabelle 12: Zusammensetzung des Polyisocyanat-Gemisches Beispiel 2b

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur W | 18,5 | 140,1 | 70,1 | - |
| Desmodur N3300 | 81,5 | 423,0 | - | 141,0 |
| Summe | 100,0 | 563,1 | 70,1 | 141,0 |
| * idealisierte Betrachtung: Funktionalitäten von größer drei werden in die Berechnungen nicht mit einbezogen. | | | | |

Anteil Triisocyanat am Polyisocyanat-Gemisch: 66,8 % (Stoffmengenanteil)

Zur Herstellung eines Haftklebstoffs wurde das in Aceton gelöste Prepolymer bei Raumtemperatur mit dem Polyisocyanat-Gemisch (Beispiele 2a und 2b) gemischt. Die jeweiligen Mischungsverhältnisse sind in Tabelle 13 aufgeführt. Das NCO/OH-Verhältnis aus allen bis dahin im Verlauf der Herstellung eingeflossenen NCO- und OH-Gruppen (in der Tabelle und im Folgenden mit "NCO/OH Gesamt" bezeichnet) betrug jeweils 1,05. Ein Großteil der ursprünglich vorhandenen OH-Gruppen wurde bereits zur Umsetzung zum Prepolymer verbraucht. Für die Reaktion mit dem Polyisocyanat standen, bezogen auf die in Tabelle 10 aufgeführten Gewichtsanteile noch 13,0 mmol OH zur Verfügung. Das Verhältnis der Gesamtanzahl der Isocyanat-Gruppen der Polyisocyanate zur Gesamtanzahl der für die Reaktion mit den Isocyanatgruppen zur Verfügung stehenden Hydroxylgruppen des haftklebrigen, hydroxyl-funktionalisierten Polyurethan-Prepolymers betrug stets 2,0. Dieses NCO/OH-Verhältnis wird in der Tabelle 13 und im Folgenden mit "NCO/OH Polyisocyanat : Prepo" bezeichnet. Die Mischungen wurden auf eine 25 $\mu$m dicke Polyesterfolie beschichtet. Das Lösungsmittel wurde bei 70 °C abgedampft. Es wurde eine 50 $\mu$m dicke Schicht auf Polyesterfolie erhalten, die mit den beschriebenen Prüfmethoden charakterisiert wurde.

Zur Herstellung eines Haftklebstoffs mit dem Verwendungsziel als Träger eines Klebebandes wurde das Prepolymer jeweils einem auf 80 °C vorgeheizten Doppelschneckenextruder kontinuierlich zugeführt. Das Polyisocyanat-Gemisch (Beispiele 2a und 2b) wurde gleichzeitig mit dem Prepolymer und an gleicher Stelle wie das Prepolymer dem Doppelschneckenextruder kontinuierlich zudosiert. Als zudosiertes Polyisocyanat-Gemisch fand jeweils eines der Polyisocyanat-Gemische aus den Beispielen 2a und 2b Verwendung.

Es wurde stets wieder ein NCO/OH Gesamt-Verhältnis von 1,05 eingestellt.

Die ie Mischungsverhältnisse sind wieder Tabelle 13 zu entnehmen.

Es wurde kontinuierlich gemischt und gefördert. Die Zeit bis zum Austritt des Extrudats aus dem Extruder betrug jeweils ca. zwei Minuten.

Das Extrudat wurde jeweils direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug jeweils 1,0 mm. Der Film wurde jeweils nach Abkühlung auf Raumtemperatur aufgewickelt, nachdem zuvor jeweils eine der beiden silikonisierten Polyesterfolien entfernt wurde. Der aufgewickelte Film wurde jeweils zwei Wochen bei Raumtemperatur gelagert.

Anschließend wurde er jeweils zum Teil wieder abgewickelt und jeweils gegen den auf silikonisierter Polyesterfolie in einer Dicke von 50 μm fertig ausgestrichen vorliegenden Polyacrylat-Haftklebstoff Durotac 280-1753 der Firma National Starch kaschiert. Die Kaschierung erfolgte jeweils ohne Vorbehandlung. Die Versuche mit dem Polyacrylat-Haftklebstoff dienten jeweils der Erprobung der Verwendung des Haftklebstoffs als Träger- oder als Funktionsschicht in einem Klebeband. Dieser Verbund wurde jeweils ebenfalls mit den beschriebenen Prüfmethoden charakterisiert. Außerdem wurde jeweils auch der nicht abgewickelte Teil des Films als einschichtiges, 1 mm dickes Klebeband mit den beschriebenen Prüfmethoden charakterisiert. In diesem Fall war der Haftklebstoff jeweils in Doppelfunktion gleichzeitig Träger und Haftklebstoff.

Tabelle 13: Mischungsverhältnisse Polyisocyanat-Gemisch : Prepolymer

|  | Beispiel 2a | Beispiel 2b |
|---|---|---|
| Mischungsverhältnis Polyisocyanat-Gemisch : Prepolymer | 100 : 5,11 (Gewichtsteile) | 100 : 4,72 (Gewichtsteile) |
| NCO/OH Gesamt | 1,05 | 1,05 |
| NCO/OH Polyisocyanat : Prepo | 2,0 | 2,0 |

Prüfergebnisse:

Tabelle 14: Prüfergebnisse, Beispiel 2a

|  | Beispiel 2a | | |
|---|---|---|---|
|  | PU-Haftklebstoff, Dicke: 50μm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| G' (bei $10^0$ rad/sec und 23°C) |  |  | 0,21 MPa |
| G" (bei $10^0$ rad/sec und 23°C) |  |  | 0,12 MPa |
| G' (bei $10^1$ rad/sec und 23°C) |  |  | 0,40 Mpa |
| G" (bei $10^1$ rad/sec und 23°C) |  |  | 0,21 MPa |
| Tack |  |  | 6,0 N |
| Klebkraft, Stahl, 300 mm/min | 6,9 N/cm (Abzugswinkel: 180°) | 22,3 N/cm (Rückseitenverstärkung, Abzugswinkel: 90°) | 16,0 N/cm (Rückseitenverstärkung, Abzugswinkel: 90°) |
| Klebkraft, ABS, 300 mm/min | 6,6 N/cm (Abzugswinkel: 180°) | 23,9 N/cm (Rückseitenverstärkung, Abzugswinkel: 90°) | 15,7 N/cm (Rückseitenverstärkung, Abzugswinkel: 90°) |
| Klebkraft, PS, 300 mm/min | 6,3 N/cm (Abzugswinkel: 180°) | 19,1 N/cm (Rückseitenverstärkung, Abzugswinkel: 90°) | 15,3 N/cm (Rückseitenverstärkung, Abzugswinkel: 90°) |

(fortgesetzt)

| | Beispiel 2a | | |
|---|---|---|---|
| | PU-Haftklebstoff, Dicke: 50μm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| Klebkraft, PC, 300 mm/min | 6,9 N/cm (Abzugswinkel: 180°) | 18,0 N/cm (Rückseitenverstärkung, Abzugswinkel: 90°) | 16,1 N/cm (Rückseitenverstärkung, Abzugswinkel: 90°) |
| Klebkraft, PVC, 300 mm/min (N/cm) | 6,2 N/cm (Abzugswinkel: 180°) | 23,1 N/cm (Rückseitenverstärkung, Abzugswinkel: 90°) | 17,3 N/cm (Rückseitenverstärkung, Abzugswinkel: 90°) |
| Haltezeit im Schertest bei Raumtemperatur, Belastung 1 kg | >10000 min | >10000 min (Rückseitenverstärkung) | >10000 min (Rückseitenverstärkung) |
| Haltezeit im Schertest bei 70°C, Belastung 1 kg | >10000 min | >10000 min (Rückseitenverstärkung) | >10000 min (Rückseitenverstärkung) |

Die Klebkraft des Haftklebstoffs Durotac280-1753, aufgetragen als 50 μm dicke Schicht auf eine 25 μm dicke Polyesterfolie, betrug zum Vergleich 5,9 N/cm.

Alle Muster zeigten in Längs- und Querrichtung gleiche Eigenschaften.

Die Dickenkonstanz der Muster war gegeben. Bei den 1,0mm dicken Mustern betrug die Standardabweichung der Dicke 0,03 mm.

Verklebungen mit Mustern aus dem Dreischichtaufbau Durotac 280-1753 / PU-Haftklebstoff (Dicke: 1,0 mm) / Durotac 280-1753 und aus dem Einschichtaufbau wurden anwendungstechnischen Prüfungen unterworfen.

Im Temperaturbereich von -30°C bis -40°C erwiesen sie sich als exzellent kälteschlagfest. Weiterhin erweisen sich diese Verklebungen unter Last und über einen längeren Zeitraum als sehr vibrationsbeständig.

Die Klebkraft des Haftklebstoffs Durotac280-1753, aufgetragen als 50 μm dicke Schicht auf eine 25 μm dicke Polyesterfolie, betrug zum Vergleich 5,9 N/cm.

Tabelle 14: Prüfergebnisse, Beispiel 2b

| | Beispiel 2b | | |
|---|---|---|---|
| | PU-Haftklebstoff, Dicke: 50μm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| G' (bei $10^0$ rad/sec und 23°C) | | | 0,26 MPa |
| G" (bei $10^0$ rad/sec und 23°C) | | | 0,16 MPa |
| G' (bei $10^1$ rad/sec und 23°C) | | | 0,5 Mpa |
| G" (bei $10^1$ rad/sec und 23°C) | | | 0,29 MPa |
| Tack | | | 6,2 N |
| Klebkraft, Stahl, 300 mm/min | 7,1 N/cm (Abzugswinkel: 180°) | 20,7 N/cm (Rückseitenverstärkung, Abzugswinkel: 90°) | 17,5 N/cm (Rückseitenverstärkung, Abzugswinkel: 90°) |

(fortgesetzt)

|  | Beispiel 2b | | |
|---|---|---|---|
|  | PU-Haftklebstoff, Dicke: 50μm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| Klebkraft, ABS, 300 mm/min | 6,9 N/cm (Abzugswinkel: 180°) | 21,2 N/cm (Rückseitenverstärkung, Abzugswinkel: 90°) | 15,3 N/cm (Rückseitenverstärkung, Abzugswinkel: 90°) |
| Klebkraft, PS, 300 mm/min | 6,5 N/cm (Abzugswinkel: 180°) | 22,0 N/cm (Rückseitenverstärkung, Abzugswinkel: 90°) | 15,8 N/cm (Rückseitenverstärkung, Abzugswinkel: 90°) |
| Klebkraft, PC, 300 mm/min | 6,1 N/cm (Abzugswinkel: 180°) | 19,5 N/cm (Rückseitenverstärkung, Abzugswinkel: 90°) | 17,2 N/cm (Rückseitenverstärkung, Abzugswinkel: 90°) |
| Klebkraft, PVC, 300 mm/min (N/cm) | 6,6 N/cm (Abzugswinkel: 180°) | 21,1 N/cm (Rückseitenverstärkung, Abzugswinkel: 90°) | 16,8 N/cm (Rückseitenverstärkung, Abzugswinkel: 90°) |
| Haltezeit im Schertest bei Raumtemperatur, Belastung 1 kg | >10000 min | >10000 min (Rückseitenverstärkung) | >10000 min (Rückseitenverstärkung) |
| Haltezeit im Schertest bei 70°C, Belastung 1 kg | >10000 min | >10000 min (Rückseitenverstärkung) | >10000 min (Rückseitenverstärkung) |

Alle Muster zeigten in Längs- und Querrichtung gleiche Eigenschaften.
Die Dickenkonstanz der Muster war gegeben. Bei den 1,0mm dicken Mustern betrug die Standardabweichung der Dicke 0,03 mm.
Verklebungen mit Mustern aus dem Dreischichtaufbau Durotac 280-1753 / PU-Haftklebstoff (Dicke: 1,0 mm) / Durotac 280-1753 und aus dem Einschichtaufbau wurden anwendungstechnischen Prüfungen unterworfen.
Im Temperaturbereich von -30°C bis -40°C erwiesen sie sich als exzellent kälteschlagfest. Weiterhin erweisen sich diese Verklebungen unter Last und über einen längeren Zeitraum als sehr vibrationsbeständig.

**Beispiel 3**

Das haftklebrige, hydroxyl-funktionalisierte Polyurethan-Prepolymer wurde durch homogenes Mischen und somit chemisches Umsetzen der folgenden Ausgangsstoffe in den angegebenen Mengenverhältnissen hergestellt:

Tabelle 15: Zusammensetzung des haftklebrigen, hydroxyl-funktionalisierten Polyurethan-Prepolymers, Beispiel 3

| Ausgangsstoff | Gewichts-anteil (Gew.%) | Stoffmengen OH- bzw. NCO-Gruppen, die dem jeweiligen Gewichtsanteil entsprechen (mmol OH bzw. mmol NCO) | Prozentuales Verhältnis der Anzahl der OH-Gruppen zueinander | Prozentuales Verhältnis der Anzahl der OH-Gruppen tragenden Moleküle zueinander (idealisiert)* |
|---|---|---|---|---|
| Voranol P 400 ® | 48,34 | 224,4 | 75,0 | 75,0 |
|  |  |  |  |  |
| MP Diol ® | 2,70 | 59,9 | 20,0 | 20,0 |
| Voranol 2000L ® | 15,13 | 15,0 | 5,0 | 5,0 |
| Tinuvin 400 ® | 0,64 |  |  |  |

(fortgesetzt)

| Ausgangsstoff | Gewichts-anteil (Gew.%) | Stoffmengen OH- bzw. NCO-Gruppen, die dem jeweiligen Gewichtsanteil entsprechen (mmol OH bzw. mmol NCO) | Prozentuales Verhältnis der Anzahl der OH-Gruppen zueinander | Prozentuales Verhältnis der Anzahl der OH-Gruppen tragenden Moleküle zueinander (idealisiert)* |
|---|---|---|---|---|
| Tinuvin 292 ® | 0,32 | | | |
| Coscat 83 ® | 0,20 | | | |
| | | | | |
| | | | | |
| Summe | | 299,3 | 100,0 | 100,0 |
| | | | | |
| Vestanat IPDI ® | 32,67 | 293,9 | | |
| Summe | 100,0 | | | |

*errechnet aus den Gewichtsanteilen und den OH-Zahlen beziehungsweise NCO-Zahlen der Ausgangsstoffe unter der stark idealisierten Annahme, dass das Voranol P400 und das Voranol 2000 L exakt die Funktionalität 2 haben.

Zunächst wurden alle aufgeführten Ausgangsstoffe außer dem MP Diol und dem Vestanat IPDI bei einer Temperatur von 70 °C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis des Prepolymers betrug 0,98. 100g des haftklebrigen, hydroxyl-funktionalisierten Polyurethan-Prepolymers enthalten 5,4 mmol OH-Gruppen. 0,0 % der zur Bildung des haftklebrigen, hydroxyl-funktionalisierten Polyurethan-Prepolymers eingebrachten Hydroxylgruppen stammen von einem Polypropylenglykol mit einer Funktionalität von größer zwei. Somit ist keines der OH-Gruppen tragenden Ausgangsstoffmoleküle trifunktionell.

Das entstandene Prepolymer war bei Raumtemperatur haftklebrig.

Die komplexe Viskosität $\eta$* betrug bei Raumtemperatur (23 °C) 22000 Pas. Das entstandene Prepolymer war schmelzbar. Weitere Daten:

G' (bei $10^0$ rad/sec und 23°C): 0,007 MPa
G" (bei $10^0$ rad/sec und 23°C): 0,02 MPa
G' (bei $10^1$ rad/sec und 23°C): 0,09 MPa
G" (bei $10^1$ rad/sec und 23°C): 0,17 Mpa
Tack: 1,9 N

Für einen Teil der Versuche wurde es in Aceton gelöst.

Das haftklebrige, hydroxyl-funktionalisierte Polyurethan-Prepolymer wurde jeweils mit dem folgenden erfindungsgemäßen Polyisocyanat-Gemisch zum erfindungsgemäßen Haftklebstoff umgesetzt:

Beispiel 3a

Tabelle 16: Zusammensetzung des Polyisocyanat-Gemisches Beispiel 3a

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur W | 18,6 | 140,8 | 70,4 | - |

(fortgesetzt)

| Polyisocyanat | Gewichtsanteil (Gew.%) | Stoffmenge NCO, die dem jeweiligen Gewichtsanteil entspricht (mmol NCO) | Stoffmenge Diisocyanat (mmol) | Stoffmenge Triisocyanate* (mmol) |
|---|---|---|---|---|
| Desmodur N3300 | 81,4 | 422,5 | - | 140,8 |
| Summe | 100,0 | 563,3 | 70,4 | 140,8 |
| * idealisierte Betrachtung: Funktionalitäten von größer drei werden in die Berechnungen nicht mit einbezogen. | | | | |

Anteil Triisocyanat am Polyisocyanat-Gemisch: 66,7 % (Stoffmengenanteil)

Zur Herstellung eines Haftklebstoffs wurde das in Aceton gelöste Prepolymer bei Raumtemperatur mit dem Polyisocyanat-Gemisch (Beispiel 3a) gemischt. Das jmischungsverhältnisse ist in Tabelle 17 aufgeführt. Das NCO/OH-Verhältnis aus allen bis dahin im Verlauf der Herstellung eingeflossenen NCO- und OH-Gruppen (in der Tabelle und im Folgenden mit "NCO/OH Gesamt" bezeichnet) betrug 1,1. Ein Großteil der ursprünglich vorhandenen OH-Gruppen wurde bereits zur Umsetzung zum Prepolymer verbraucht. Für die Reaktion mit dem Polyisocyanat standen, bezogen auf die in Tabelle 15 aufgeführten Gewichtsanteile noch 5,4 mmol OH zur Verfügung. Das Verhältnis der Gesamtanzahl der Isocyanat-Gruppen der Polyisocyanate zur Gesamtanzahl der für die Reaktion mit den Isocyanatgruppen zur Verfügung stehenden Hydroxylgruppen des haftklebrigen, hydroxyl-funktionalisierten Polyurethan-Prepolymers betrug 6,5. Dieses NCO/OH-Verhältnis wird in der Tabelle und im Folgenden mit "NCO/OH Polyisocyanat : Prepo" bezeichnet. Die Mischung wurden auf eine 25 μm dicke Polyesterfolie beschichtet. Das Lösungsmittel wurde bei 70 °C abgedampft. Es wurde eine 50 μm dicke Schicht auf Polyesterfolie erhalten, die mit den beschriebenen Prüfmethoden charakterisiert wurde.

Zur Herstellung eines Haftklebstoffs mit dem Verwendungsziel als Träger eines Klebebandes wurde das Prepolymer einem auf 80 °C vorgeheizten Doppelschneckenextruder kontinuierlich zugeführt. Das Polyisocyanat-Gemisch (Beispiel 3a) wurde gleichzeitig mit dem Prepolymer und an gleicher Stelle wie das Prepolymer dem Doppelschneckenextruder kontinuierlich zudosiert. Als zudosiertes Polyisocyanat-Gemisch fand das Polyisocyanat-Gemisch aus Beispiel 3a Verwendung. Es wurde stets wieder ein NCO/OH Gesamt-Verhältnis von 1,1 eingestellt. Das Mischungsverhältnis ist wieder Tabelle 17 zu entnehmen. Es wurde kontinuierlich gemischt und gefördert. Die Zeit bis zum Austritt des Extrudats aus dem Extruder betrug ca. zwei Minuten.

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. Der aufgewickelte Film wurde zwei Wochen bei Raumtemperatur gelagert. Anschließend wurde er zum Teil wieder abgewickelt und gegen den auf silikonisierter Polyesterfolie in einer Dicke von 50 μm fertig ausgestrichen vorliegenden Polyacrylat-Haftklebstoff Durotac 280-1753 der Firma National Starch kaschiert. Die Kaschierung erfolgte ohne Vorbehandlung. Die Versuche mit dem Polyacrylat-Haftklebstoff dienten der Erprobung der Verwendung des Haftklebstoffs als Träger- oder als Funktionsschicht in einem Klebeband. Dieser Verbund wurde ebenfalls mit den beschriebenen Prüfmethoden charakterisiert. Außerdem wurde auch der nicht abgewickelte Teil des Films als einschichtiges, 1 mm dickes Klebeband mit den beschriebenen Prüfmethoden charakterisiert. In diesem Fall war der Haftklebstoff in Doppelfunktion gleichzeitig Träger und Haftklebstoff.

Tabelle 17: Mischungsverhältnis Polyisocyanat-Gemisch : Prepolymer

| | Beispiel 3a |
|---|---|
| Mischungsverhältnis Polyisocyanat-Gemisch : Prepolymer | 100 : 6,27 (Gewichtsteile) |
| NCO/OH Gesamt | 1,1 |
| NCO/OH Polyisocyanat : Prepo | 6,5 |

Prüfergebnisse:

Tabelle 18: Prüfergebnisse, Beispiel 3a

| | Beispiel 3a | | |
|---|---|---|---|
| | PU-Haftklebstoff, Dicke: 50μm auf PET-Folie | Klebeband aus Dreischichtaufbau: Durotac 280-1753 / PU-Haftklebstoff (Dicke: 1,0 mm) / Durotac 280-1753 | PU-Haftklebstoff-Einschicht Dicke: 1,0 mm |
| G' (bei $10^0$ rad/sec und 23°C) | | | 0,07 MPa |
| G" (bei $10^0$ rad/sec und 23°C) | | | 0,14 MPa |
| G' (bei $10^1$ rad/sec und 23°C) | | | 0,21 Mpa |
| G" (bei $10^1$ rad/sec und 23°C) | | | 0,28 MPa |
| Tack | | | 1,3 N |
| Klebkraft, Stahl, 300 mm/min | 3,8 N/cm (Abzugswinkel: 180°) | 12,4 N/cm (Rückseitenverstärkung, Abzugswinkel: 90°) | 9,3 N/cm (Rückseitenverstärkung, Abzugswinkel: 90°) |
| Klebkraft, ABS, 300 mm/min | 2,7 N/cm (Abzugswinkel: 180°) | 14,2 N/cm (Rückseitenverstärkung, Abzugswinkel: 90°) | 9,7 N/cm (Rückseitenverstärkung, Abzugswinkel: 90°) |
| Klebkraft, PS, 300 mm/min | 3,5 N/cm (Abzugswinkel: 180°) | 14,1 N/cm (Rückseitenverstärkung, Abzugswinkel: 90°) | 10,3 N/cm (Rückseitenverstärkung, Abzugswinkel: 90°) |
| Klebkraft, PC, 300 mm/min | 3,7 N/cm (Abzugswinkel: 180°) | 15,0 N/cm (Rückseitenverstärkung, Abzugswinkel: 90°) | 10,8 N/cm (Rückseitenverstärkung, Abzugswinkel: 90°) |
| Klebkraft, PVC, 300 mm/min (N/cm) | 3,2 N/cm (Abzugswinkel: 180°) | 11,9 N/cm (Rückseitenverstärkung, Abzugswinkel: 90°) | 10,8 N/cm (Rückseitenverstärkung, Abzugswinkel: 90°) |
| Haltezeit im Schertest bei Raumtemperatur, Belastung 1 kg | >10000 min | >10000 min (Rückseitenverstärkung) | >10000 min (Rückseitenverstärkung) |
| Haltezeit im Schertest bei 70°C, Belastung 1 kg | >10000 min | >10000 min (Rückseitenverstärkung) | >10000 min (Rückseitenverstärkung) |

Die Klebkraft des Haftklebstoffs Durotac280-1753, aufgetragen als 50 μm dicke Schicht auf eine 25 μm dicke Polyesterfolie, betrug zum Vergleich 5,9 N/cm.
Alle Muster zeigten in Längs- und Querrichtung gleiche Eigenschaften.
Die Dickenkonstanz der Muster war gegeben. Bei den 1,0mm dicken Mustern betrug die Standardabweichung der Dicke 0,03 mm.
Verklebungen mit Mustern aus dem Dreischichtaufbau Durotac 280-1753 / PU-Haftklebstoff (Dicke: 1,0 mm) / Durotac 280-1753 und aus dem Einschichtaufbau wurden anwendungstechnischen Prüfungen unterworfen.
Im Temperaturbereich von -30°C bis -40°C erwiesen sie sich als exzellent kälteschlagfest. Weiterhin erweisen sich diese Verklebungen unter Last und über einen längeren Zeitraum als sehr vibrationsbeständig.

**Patentansprüche**

1. Haftklebstoff auf Basis von Polyurethan, **dadurch gekennzeichnet, dass** das Polyurethan das chemische Umsetzungsprodukt aus zumindest folgenden Ausgangsstoffen umfasst:

   a) Polyisocyanate umfassend zumindest ein aliphatisches oder alicyclisches Diisocyanat und zumindest ein aliphatisches oder alicyclisches Polyisocyanat mit einer Isocyanat-Funktionalität von drei oder größer drei, wobei der Stoffmengenanteil der aliphatischen oder alicyclischen Polyisocyanate mit einer Isocyanat-Funktionalität von drei oder größer drei an den Polyisocyanaten mindestens 18 Prozent beträgt und
   b) zumindest ein haftklebriges, hydroxyl-funktionalisiertes Polyurethan-Prepolymer.

2. Haftklebstoff nach einem der vorangehenden Ansprüche, **dadurch gekennzeichnet, dass** der Stoffmengenanteil der aliphatischen oder alicyclischen Polyisocyanate mit einer Isocyanat-Funktionalität von drei oder größer drei an den Polyisocyanaten im Bereich von mindestens 20 Prozent bis höchstens 90 Prozent, bevorzugt im Bereich von mindestens 25 Prozent bis höchstens 70 Prozent beträgt.

3. Haftklebstoff nach einem der vorangehenden Ansprüche, **dadurch gekennzeichnet, dass** die komplexe Viskosität η* des haftklebrigen, hydroxyl-funktionalisierten Polyurethan-Prepolymers, gemessen mittels Dynamisch Mechanischer Analyse in einer Platte / Platte Anordnung bei Raumtemperatur und einer Oszillationsfrequenz von 10 rad/s, größer oder gleich 8000 Pas beträgt.

4. Haftklebstoff nach einem der vorangehenden Ansprüche, **dadurch gekennzeichnet, dass** das haftklebrige, hydroxyl-funktionalisierte Polyurethan-Prepolymer eine Hydroxyl-Funktionität von größer 2 hat.

5. Haftklebstoff nach einem der vorangehenden Ansprüche, **dadurch gekennzeichnet, dass** das Verhältnis der Gesamtanzahl der Isocyanat-Gruppen der Polyisocyanate nach Anspruch 1 zur Gesamtanzahl der für die Reaktion mit den Isocyanatgruppen zur Verfügung stehenden Hydroxylgruppen des haftklebrigen, hydroxyl-funktionalisierten Polyurethan-Prepolymers im Bereich von 0,9 bis 5,0 liegt.

6. Haftklebstoff nach einem der vorangehenden Ansprüche, **dadurch gekennzeichnet, dass** der Haftklebstoff weitere Additive enthält, wie zum Beispiel Mikrokugeln, Füllstoffe, rheologische Additive, Harze, Weichmacher, Lichtschutzmittel, UV-Schutzmittel, oder Alterungsschutzmittel.

7. Haftklebstoff nach einem der vorangehenden Ansprüche, **dadurch gekennzeichnet, dass** den Ausgangsstoffen zumindest ein Katalysator für die Umsetzung zugesetzt ist.

8. Haftklebstoff nach Anspruch 1, **dadurch gekennzeichnet, dass** der Haftklebstoff geschäumt oder schaumartig ist.

9. Haftklebriger Formkörper, bevorzugt haftklebrige Schicht, umfassend zumindest einen Haftklebstoff nach einem der vorhergehenden Ansprüche.

10. Klebeband umfassend zumindest eine haftklebrige Schicht enthaltend zumindest einen Haftklebstoff nach einem der vorhergehenden Ansprüche.

11. Verfahren zur Herstellung eines Haftklebstoffs nach einem der vorangehenden Ansprüche, **dadurch** gekennzeichent, dass zumindest folgende Ausgangsstoffe zur Reaktion gebracht werden:

    a) Polyisocyanate, umfassend zumindest ein aliphatisches oder alicyclisches Diisocyanat und zumindest ein aliphatisches oder alicyclisches Polyisocyanat mit einer Isocyanat-Funktionalität von drei oder größer drei, wobei der Stoffmengenanteilder aliphatischen oder alicyclischen Polyisocyanate mit einer Isocyanat-Funktionalität von drei oder größer drei an den Polyisocyanaten mindestens 18 Prozent beträgt und
    b) zumindest ein haftklebriges, hydroxyl-funktionalisiertes Polyurethan-Prepolymer.

12. Verfahren nach Anspruch 11, **dadurch** gekennzeichent, dass die Umsetzung der Polyisocyanate mit dem haftklebrigen, hydroxyl-funktionalisierten Polyurethan-Prepolymer kontinuierlich erfolgt.

13. Verfahren nach einem der Ansprüche 11 oder 12, **dadurch** gekennzeichent, dass die Umsetzung der Polyisocyanate mit dem haftklebrigen, hydroxyl-funktionalisierten Polyurethan-Prepolymer lösungsmittelfrei gestartet wird, insbesondere in der Schmelze.

14. Verfahren nach einem der ansprüche 11 bis 13, **dadurch gekennzeichnet, dass** die Umsetzung der Polyisocyanate mit dem haftklebrigen, hydroxyl-funktionalisierten Polyurethan-Prepolymer in einem Extrusionsprozess oder Coextrusionsprozess gestartet wird.

15. Verwendung eines Haftklebstoffs nach einem der Ansprüche 1 bis 8 oder eines nach einem Verfahren nach einem der Anspüche 11 bis 14 hergestellten Haftklebstoffs als Haftklebstoffschicht und/oder Trägerschicht und/oder Funktionsschnicht in einem Klebeband.

| | Europäisches Patentamt |
|---|---|
| | European Patent Office |
| | Office européen des brevets |

**EUROPÄISCHER RECHERCHENBERICHT**

Nummer der Anmeldung

EP 10 18 9548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | EP 2 119 735 A1 (TESA SE [DE]) 18. November 2009 (2009-11-18) * Absätze [0036], [0044]; Ansprüche 1,8,15,17-18; Beispiel 1; Tabelle 3 * ----- | 1-15 | INV. C08G18/08 C08G18/12 C08G18/66 C09D175/08 |
| Y | DATABASE WPI Week 200650 Thomson Scientific, London, GB; AN 2006-485264 XP002617626, -& JP 2006 182795 A (MITSUBISHI CHEM CORP) 13. Juli 2006 (2006-07-13) * Zusammenfassung * ----- | 1-15 | C09J7/02 C09J175/04 C08G18/30 |
| Y | EP 1 469 055 A1 (TESA AG [DE]) 20. Oktober 2004 (2004-10-20) * Anspruch 1; Beispiele 11,15 * ----- | 1-15 | |

RECHERCHIERTE SACHGEBIETE (IPC)

C08G
C09D
C09J

Der vorliegende Recherchenbericht wurde für alle Patentansprüche erstellt

| Recherchenort | Abschlußdatum der Recherche | Prüfer |
|---|---|---|
| München | 21. Januar 2011 | Scheuer, Sylvie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

       .......................................................................
& : Mitglied der gleichen Patentfamilie, übereinstimmendes Dokument

EPO FORM 1503 03.82 (P04C03)

# EP 2 325 220 A1

## ANHANG ZUM EUROPÄISCHEN RECHERCHENBERICHT
## ÜBER DIE EUROPÄISCHE PATENTANMELDUNG NR.

EP 10 18 9548

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 2119735 | A1 | 18-11-2009 | CA | 2663310 A1 | 13-11-2009 |
| | | | CA | 2723916 A1 | 19-11-2009 |
| | | | CN | 101638467 A | 03-02-2010 |
| | | | DE | 102008023252 A1 | 19-11-2009 |
| | | | WO | 2009138402 A1 | 19-11-2009 |
| | | | JP | 2009275224 A | 26-11-2009 |
| | | | KR | 20090118855 A | 18-11-2009 |
| | | | US | 2009286950 A1 | 19-11-2009 |
| JP 2006182795 | A | 13-07-2006 | KEINE | | |
| EP 1469055 | A1 | 20-10-2004 | DE | 10317791 A1 | 02-12-2004 |
| | | | ES | 2264552 T3 | 01-01-2007 |
| | | | US | 2005027091 A1 | 03-02-2005 |

EPO FORM P0461

Für nähere Einzelheiten zu diesem Anhang : siehe Amtsblatt des Europäischen Patentamts, Nr.12/82

33

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1469024 A2
- EP 1469055 B1
- EP 1849811 A1
- WO 2008009542 A
- EP 0801121 B1
- EP 0894841 B1
- EP 1095993 B1
- EP 0259094 B1
- EP 0305161 B1
- DE 10003318 A1
- DE 10252088 A1
- DE 2059570 A
- DE 102005039933 A
- DE 2248382 C2
- US 20070049719 A1

- US 20070129456 A1
- DE 1964834 A
- DE 2302564 C3
- EP 135111 B1
- JP 2006182795 A
- DE 102004044086 A1
- US 5712216 A
- US 5693584 A
- WO 9956874 A
- WO 9951661 A
- WO 9959719 A
- WO 9964152 A
- US 5952261 A
- WO 9964493 A
- WO 9951657 A

**In der Beschreibung aufgeführte Nicht-Patentliteratur**

- **Satas.** Handbook of Pressure Sensitive Adhesive Technology. 1999, 153-203
- **Gaechter ; Müller.** *Taschenbuch der Kunststoff-Additive,* 1979

- Kirk-Othmer. vol. 23, 615-627
- *Encycl. Polym. Sci. Technol.,* vol. 14, 125-148
- Ullmann. vol. 8, 21
- ULLMANN. vol. 15, 529, 676